# EUROPÄISCHE PATENTSCHRIFT

(11) **EP 4 375 058 B1**
(45) Veröffentlichungstag und Bekanntmachung des Hinweises auf die Patenterteilung: **25.06.2025**
(21) Anmeldenummer: 23000093.7
(22) Anmeldetag: 05.07.2023
(51) Int. Cl.: B32B 3/20, B32B 13/02, C04B 28/00, B32B 5/02, C04B 14/38, C04B 14/42

(54) **ALS SANDWICH AUFGEBAUTE FLÄCHIGE FORMKÖRPER**
FLAT MOULDED BODIES CONSTRUCTED AS SANDWICH
CORPS MOULÉS PLATS EN FORME DE SANDWICH

(30) Priorität: 13.07.2022 DE 102022002551; 04.04.2023 DE 102023001330
(43) Veröffentlichungstag der Anmeldung: 29.05.2024
(73) Patentinhaber: Koller Kunststofftechnik GmbH, 92345 Dietfurt (DE)
(72) Erfinder: Schillinger, Alfons, 85057 Ingolstadt (DE); Koller, Max, 92345 Dietfurt (DE); Barg, Andree, 21762 Otterndorf (DE)

(56) Entgegenhaltungen:
- WO-A1-2016/000026
- WO-A1-2019/129398
- DE-C2- 3 516 132
- US-A1- 2008 185 749
- US-B1- 6 992 027

## Beschreibung

Die vorliegende Erfindung betrifft als Sandwich aufgebaute, flächige Formkörper zur Verwendung in Innenräumen von Gebäuden oder in Innenräumen von Transportmitteln, umfassend a) eine zentrale Kernschicht mit einer Vielzahl von Hohlkörpern, b) ein zur Kernschicht beidseitiges Fasergeflecht und c) ein beidseitig auf das Fasergeflecht aufgetragenes, zumindest teilweise geschäumtes im Wesentlichen anorganisches Bindemittel, umfassend ein Geopolymer, oder als Sandwich aufgebaute, flächige Formkörper zur Verwendung in Innenräumen von Gebäuden oder in Innenräumen von Transportmitteln, bestehend aus a) einer zentralen Kernschicht mit einer Vielzahl von Hohlkörpern, b) einem zur Kernschicht beidseitigem Fasergeflecht und c) einem beidseitig auf das Fasergeflecht aufgetragenes, zumindest teilweise geschäumtes im Wesentlichen anorganisches Bindemittel, umfassend ein Geopolymer, wobei das Geopolymer aus der thermischen Polymerisation einer härtbaren und schäumbaren Zusammensetzung herstellbar ist, die umfasst
- mindestens eine feste steinbildende Phase, bestehend aus Metakaolin,
- mindestens eine wässrige, alkalische Phase,
- mindestens ein Schäumungsmittel und
- mindestens ein Tensid,
wobei die Mehrzahl der gebildeten Schaumzellen des im Wesentlichen anorganischen Bindemittels, umfassend ein Geopolymer, während der thermischen Härtung in dem begrenzten Expansionsraum einer Pressform wieder größtenteils zerstört wird.

Die Erfindung zielt ferner auf ein Verfahren zur Herstellung erfindungsgemäßer als Sandwich aufgebauter, flächiger Formkörper.

Die Erfindung ist des Weiteren vorgesehen für eine Verwendung der als Sandwich aufgebauten flächigen Formkörper als Konstruktionselemente in Innenräumen von Gebäuden oder in Innenräumen von Transportmitteln, insbesondere für Innenräume von Personenkraftfahrzeugen, Lastkraftfahrzeugen, Wohnmobilen, Zügen, Flugzeugen, Flugkörpern, Schiffen, Unterseebooten sowie in der Raumfahrt, besonders bevorzugt ist ihre Verwendung als Konstruktionselement in Automobilen als Hutablage, als Kofferraumladeboden, als Autotürverkleidungsträger oder als Autohimmel.

Obwohl die erfindungsgemäßen, als Sandwich aufgebauten flächigen Formkörper ein breites Anwendungsspektrum aufweisen, beziehen wir uns in der Darstellung und der Diskussion zum Stand der Technik auf Anwendungen im Innenbereich von Automobilen.

### Stand der Technik

Flächige Formkörper zur Verwendung im Innenbereich von Automobilen sind im Stand der Technik seit langem und hinreichend bekannt.

In der Patentschrift DE 26 15 793 C2, betitelt "Formteil und Verfahren zu seiner Herstellung" wird ein Formteil mit textiler Oberfläche als Hutablage beschrieben. Das Formteil besteht aus gehärtetem duroplastischem Harz, einem Fasermaterial und einer Auflage in Form eines mit der Trägerschicht verbundenen Vlieses.

In der Patentschrift DE 35 16 132 C2, betitelt "Mehrschichtige, tiefgezogene Innenverkleidung für Personenkraftfahrzeuge, insbesondere Autohimmel, sowie Verfahren zur Nachbesserung tiefgezogener Formteile", wird ein Formteil mit einer Schicht aus thermoplastischem Schaumstoff, die auf beiden Außenseiten je eine dünne Schicht von Glasfaservlies aufweist, offenbart.

Die Offenlegungsschrift DE 38 38 247 A1, betitelt "Formplatte für den Einsatz im Automobilbau sowie Verfahren zu deren Herstellung" offenbart eine Formplatte u.a. zur Verwendung als Hutablage, Fertighimmel, Seitenverkleidung und Kofferraumauskleidung, bestehend aus einer bestimmten Mischung aus PolyesterFasern und Polyethylen-Fasern und/oder Polypropylen-Fasern.

Die Offenlegungsschrift DE 38 41 560 A1, betitelt "Formplatte und Formteile für den Einsatz im Automobilbau sowie Verfahren zu deren Herstellung" zielt ebenfalls auf eine Verwendung der erfindungsgemäßen Gegenstände u.a. als Hutablage, Fertighimmel, Seitenverkleidung und Kofferraumauskleidung im Automobilbau sowie im Bauwesen u.a. für Dekorplatten und zur Wandverkleidung. Aufgabe dieser Erfindung ist eine Substitution der bisherigen Bindemittel mit Phenol- oder Melaminharzen, die als umweltbelastend gelten und in diesem Falle durch den Einsatz eines PP-Granulats bei hohen Temperaturen erfolgt, das beidseitig mit einer Deckschicht aus Glasfaserflies gefertigt werden kann.

Die Offenlegungsschrift DE 40 30 964 A1, betitelt "Verfahren zum Herstellen eines Kunststoffformteils", offenbart ein Verfahren zur Herstellung eines Automobilausstattungsteils, wie u.a. einer Hutablage, einem Fahrzeughimmel, einer Innenseitenauskleidung oder einer Kartentasche. Vorteilhafterweise werden zwischen den Werkzeughälften des offenen Formwerkzeuges zwei Dekormaterialbahnen eingespannt und eine plastifizierende Kunststoffmasse eingebracht und unter Schließung des Formwerkzeuges gegen die Dekormaterialbahnen formgeprägt.

Das Gebrauchsmuster DE 91 08 065 U1, betitelt "Formmassen" zielt auf die Verwendung dieser Formmassen u.a. zur Herstellung von Innenverkleidungsteilen wie Hutablagen, Seitenverkleidungen oder Himmel in Automobilen. Hierbei werden Formmassen beansprucht, die aus Textilfasern, faserigem Mahlgut aus glasfaserverstärktem, thermoplastischem Material und optional eines Härters oder Harz-Härter Gemisches bestehen und aus einem Pressverfahren resultieren, wobei als härtbare Harze Phenolharze in Form von Resolen oder Novolaken, Melamin-, Harnstoff-, Epoxyd-, Polyester- oder Polyurethanharze vorgeschlagen werden.

Die Patentschrift DE 41 26 884 B4 betrifft Formteile für die Innenraumverkleidung im Kraftfahrzeugbau wie Hutablage oder Kofferraumverkleidung. Erfindungsgemäß wird aufgrund unerwünschter Emissionswerte bei der Verarbeitung herkömmlicher duroplastischer Harztypen wie Phenolharze, Polyester- oder Epoxydharze bei der Herstellung dieser Formteile vorgeschlagen, eine faserverstärkte, verdichtete Polypropylenplatte einzusetzen.

Die Offenlegungsschrift DE 44 41 765 A1, betitelt "Bindemittelzusammensetzung zur Herstellung von Faservliesen und Verfahren zur Herstellung von Faservliesformteilen", beschreibt ebenfalls den Einsatz erfindungsgemäßer Faservliesen u.a. als Hutablage oder als Deckenverkleidung in der Automobilindustrie. Erfindungsgemäßer Gegenstand ist eine Mischung aus einer pulverförmigen Bindemittelmischung, die Pulverlackabfälle und optional Phenolharze enthält und organische und/oder anorganische Fasern umfasst. Bei den verwendeten Pulverlacken handelt es sich um übliche Epoxyd-, Polyester-, Polyurethan- oder Acrylharze.

Die Offenlegungsschrift DE 195 43 635 A1, betitelt "Verbundwerkstoffe aus Polyhydroxyfettsäuren und Fasermaterialien", beansprucht ebenfalls die Verwendung erfindungsgemäßer Verbundwerkstoffe zur Herstellung von Dachhimmel, Hutablagen und Kofferraummatten im Automobilbereich. Zur Substitution von Phenolharzen, die als nicht umweltverträglich gelten, wird ein Verbundwerkstoff aus Fasermaterial und Bindemittel vorgeschlagen, wobei das Bindemittel aus einem Polymer aus Hydroxyfettsäuren besteht.

Die Offenlegungsschrift DE 197 57 102 A1, betitelt "Selbsttragendes Automobilformteil", sieht auch eine Verwendung des erfindungsgemäßen Formteils insbesondere als Dachhimmel, Hutablage oder Kofferraummatte vor. Beansprucht wird ein Formteil, dessen Trägerschicht aus gehärtetem pulverförmigem Harz besteht. Bevorzugte Pulverharze sind Epoxyd-, Polyester-, Acrylat,- und Polyurethanharze.

Die Offenlegungsschrift DE 198 40 050 A1, betitelt "Hitze- und dimensionsstabiler verfestigter Vliesstoff", beansprucht einen Vliesstoff aus zwei Faserkomponenten, wobei die eine Faserkomponente eine Mantel-Kern Variante ist, die einen Kern aus Polyethylenglykolterephthalat oder Polybutylenglykolterephthalat und einen Mantel aus kristallinem Co-Polyester aufweist. Der erfindungsgemäße Vliesstoff kann als Formteil u.a. beim Bau von Automobilen im Dachhimmelbereich, als Hutablage, als Seitenverkleidung oder im Bodenbereich eingesetzt werden.

In der DE 699 29 126 T2, betitelt "Formmaterial, seine Benutzung als Innenmaterial und Verfahren zu seiner Herstellung", kann das erfindungsgemäße Formmaterial als Innenraummaterial eines Automobils verwendet werden, beispielsweise zur Verkleidung eines Kofferraums. Das beanspruchte Formmaterial besteht aus einem porösen Material, das mit einem Phenolharz imprägniert ist, wobei das Phenolharz teilweise oder vollständig sulfomethyliert und/oder sulfimethyliert ist und im B-Zustand vorliegt.

Die Offenlegungsschrift DE 101 47 527 A1, betitelt "Kraftfahrzeuginnenteile und Verfahren zu deren Herstellung" zielt auf dreidimensionale Formteile in Form von Hutablagen und Türverkleidungen für Automobile, die aus zwei flexiblen Deckschichten und einer Zwischenschicht hergestellt werden, wobei diese aus zerkleinerten Industrieabfällen stammen, teilweise aus solchen, die bei der Erstproduktion von Kraftfahrzeuginnenteilen stammen.

Die Offenlegungsschicht DE 102 29 473 A1, betitelt "Verbundteile aus Deckschichten und Polyurethan-Sandwichmaterialien und ihre Herstellung" beansprucht ein Verbundteil aus a) einer Kernschicht, b) beidseitig der Kernschicht angeordneten Faserplatten, die mit einem Polyurethanharz getränkt sind und c) einer Deckschicht mit "class-A-Oberflächenqualität auf einer der Faserschichten. Beanspruch wird ebenso die Verwendung der erfindungsgemäßen Verbundteile zur Herstellung u.a. von Dach-, Heckklappen-, Tür- oder Bodenplattenmodulen für Kraftfahrzeuge.

Die Offenlegungsschrift DE 103 10 368 A1, betitelt "Ladeboden", offenbart einen Ladeboden für den Laderaum eines Kraftfahrzeuges, wobei die Ladeplatte aus einem Materialverbund hergestellt ist, der zumindest eine Sandwich-Konstruktion mit einer Kernschicht umfasst, die zwischen mindestens zwei Deckschichten angeordnet ist. Die Kernschicht weist dabei eine Wabenstruktur auf und umfasst insbesondere eine Papierwabe und/oder eine Kunststoffwabe und die Kernschicht ist aus einem Schaummaterial, insbesondere aus Polyurethan, aus Polypropylen oder aus PVC-Schaum hergestellt.

Die Offenlegungsschrift DE 103 42 613 A1, betitelt "Mehrschichtiges Verkleidungsteil für ein Kraftfahrzeug" ist ausgerichtet auf eine Fahrzeug-Innenverkleidung, beispielsweise auf eine Türverkleidung, auf eine Hutablage oder auf eine Dachhaut. Beansprucht ist ein mehrschichtiges Verkleidungsteil mit einer Kernschicht, die beidseitig jeweils von einer Deckschicht überdeckt ist, wobei zumindest eine der Deckschichten Glasfasern und/oder Naturfasern enthält. Weiterhin beansprucht wird, dass die Deckschichten einen thermoplastischen Kunststoff aufweisen und die Kernschicht von einem Schaum aus einem thermoplastischen Kunststoff gebildet wird.

Die Gebrauchsmusterschrift DE 20 2005 021 886 U1, betitelt "Sandwichelement", offenbart ein Sandwichelement mit ausgezeichneter Steifigkeit, Tragfähigkeit und einem extrem niedrigen Gewicht, das für Verwendungen u.a. im Fahrzeugbau, Caravanbau oder Schiffsinnenausbau vorgesehen ist. Das erfindungsgemäße Sandwichelement umfasst mindestens zwei Deckschichten und mindestens eine zwischen den Deckschichten angeordnete Mittellage in Form eines periodisch wiederkehrenden, zweifach gekrümmten Schalentragwerks mit gegensinnigen Hauptkrümmungen.

Die Offenlegungsschrift 10 2004 010 810 A1, betitelt "Verbundbauteil" zielt auf ein Bauteil auf Basis einer Sandwichstruktur, die wenigstens besteht aus zwei Deckschichten und einer zwischen den Deckschichten angeordneten Kernschicht, wobei ein Gießharzsystem die Deckschichten und die Kernschicht teilweise durchdringt und die Deckschichten mit der Kernschicht durch Verpressen verbunden sind und wobei in wenigstens in einem Bereich der Sandwichstruktur die Deckschichten gegeneinander verpresst sind und die Sandwichstruktur in dem verpressten Bereich mit Kunststoff umspritzt ist. Ein erfindungsgemäßes Verbundbauteil kann u.a. im Automobilbau für Elemente von Türverkleidungen, Fahrzeugböden und Instrumententafeln eingesetzt werden.

In der Offenlegungsschrift DE 2006 040 748 A1, betitelt "Spritzgussverfahren für faserverstärkte Kraftfahrzeugteile" werden Verkleidungsteile und Hutablagen von Automobilen aus faserverstärkten Kunststoffen, die im Spritzgussverfahren hergestellt werden, beschrieben.

In der Offenlegungsschrift DE 10 2006 035 361 A1, betitelt "Geformter Artikel, Vliesstoff sowie deren Herstellung und Verwendung" wird die Verwendung eines erfindungsgemäßen Artikels für den Automobilbau u.a. als Dachhimmel, Innen- oder Kofferraumauskleidung beansprucht. Der erfindungsgemäße Artikel wird aus einem Vliesstoff hergestellt, der eine Vielzahl von Filamenten aufweist, wobei die Filamente in mehreren Lagen angeordnet sind.

In der Offenlegungsschrift DE 10 2007 004 696 A1, betitelt "Schichtkörper", werden als erfindungsgemäße Schichtkörper insbesondere eine Hutablage, aber auch Verkleidungen oder Abdeckungen in der PKW- oder LKW Fertigung dargestellt, die zumindest eine Kernschicht und vorzugsweise zwei Deckschichten aufweisen. Gemäß einer Ausführungsvariante besteht das Material der Kernschicht aus Kunststoff, insbesondere aus Polyurethan oder Schaumstoff. Im Falle eines Kunststoffschaums, beispielsweise eines Polyurethanschaums kann das Raumgewicht des Schichtkörpers reduziert werden. Die Form der Kernschicht kann gitter- oder lochplattenartig, insbesondere auch wabenförmig ausgebildet sein. Die Deckschichten können aus einem Matrixelement aus Kunststoff gefertigt sein, in dem entsprechende Fasern eingebettet sind. Es wird hier somit auch ein Sandwichverbund offenbart.

Die Offenlegungsschrift DE 10 2007 007 554 A1, betitelt "Flächiges Verbundbauteil eines Fahrzeuges und Verfahren zu dessen Herstellung" offenbart ein flächiges biegesteifes Verbundteil, das in vorteilhafter Weise als Schiebehimmel, Hutablage oder Ladebogen eines Kraftfahrzeuges einsetzbar ist. Das Verbundbauteil umfasst eine Sandwich-Anordnung mit einer Kernschicht, die zwischen zwei Deckschichten angeordnet ist, die unabhängig voneinander jeweils als Polyurethanschicht ausgebildet sind, in die eine Faserschicht eingebettet ist. Erfindungsgemäß wird zur Erhöhung der Biegefestigkeit in die Kernschicht mindestens ein profilartig ausgebildetes Verstärkungselement eingebettet.

Die Patentschrift DE 10 2009 003 382 B4, betitelt "Verfahren zur Herstellung eines Faserverbundmaterials" beschreibt ein kompliziertes Verfahren zur Herstellung eines Faserverbundmaterials mit einer Struktur, in der Verstärkungsfasern mit einem thermoplastischen Harz verbunden sind. Die Anwendung des Materials kann u.a. in einem Automobil erfolgen u.a. als Innenmaterial und hier als Dachverkleidung, als Hutablage oder Türverkleidung.

Die Offenlegungsschrift DE 10 2015 015 010 A1, betitelt "Hutablage für einen Personenkraftwagen sowie Verfahren zur Herstellung einer solchen Hutablage" beschreibt einen Sandwichverbund, der Deckschichten aus faserverstärktem Material und eine zwischen den Deckschichten angeordnete Kernschicht aus einem Kunststoffschaum aufweist, wobei zwischen der Kernschicht und der jeweiligen Deckschicht wenigstens eine jeweilige Anbindungsschicht angeordnet ist, über welche ein Verbund zwischen Kernschicht und der jeweiligen Deckschicht hergestellt wird.

Die Offenlegungsschrift DE 10 2016 204 624 A1, betitelt "Sandwich-Verbundbauteil zur Verwendung als Ladeboden oder Hutablage eines Kraftfahrzeuges" beansprucht ein Verbundbauteil, das einen Schaumkern, eine hieran angeordnete, aus einem Faserverbundwerkstoff bestehende obere Decklage und eine an den Schaumkern angeordnete, aus einem Faserverbundwerkstoff bestehende untere Decklage aufweist und so eingerichtet ist, bei einem unfallbedingten Aufprall des Kraftfahrzeuges einen Anteil der auftretenden Aufprallenergie durch plastische Verformung aufzunehmen. Die Aufprallenergie wird hier durch Stauchung infolge einer Vielzahl von fortschreitenden Brüchen im Material absorbiert. Diese Wirkung wird durch das Vorhandensein einer Anzahl von jeweils benachbarten Zellen im Schaumkern hervorgerufen. Es wird ferner beansprucht, dass der Schaumkern und die Decklage in einer Matrix eingebettet sind und Schaumkern sowie Matrix aus Polyurethan gebildet sind.

Die Offenlegungsschrift DE 10 2017 210 790 A1, betitelt "Verfahren zum Herstellen eines Sandwichelements und Sandwichbauteils" richtet sich auf ein Bauteil zur Verwendung in einem Fahrzeuginnenraum, beispielsweise als Kartentasche, Hutablage oder Kofferraumabdeckung. Beansprucht wird ein Verfahren, in dem zunächst ein Presswerkzeug mit einer ersten und einer zweiten Werkzeughälfte bereitgestellt wird. In das Presswerkzeug werden eine erste, mit einem aufschäumbaren Material imprägnierte, Fasermatte und eine zweite Fasermatte eingelegt. Die Fasermatten werden dabei aufeinandergelegt, sodass sie in einer dafür vorgesehenen Aussparung zwischen der ersten und zweiten Werkzeughälfte angeordnet sind. Nun wird das aufschäumbare Material aktiviert. Es schäumt auf und der Abstand zwischen der zweiten und der ersten Werkzeughälfte wird derart erhöht, dass eine die erste und zweite Fasermatte verbindende Schaumschicht zwischen der ersten und der zweiten Fasermatte gebildet wird, wobei die Schaumschicht zumindest teilweise in die Fasermatten eindringt und diese verbindet.

Die Gebrauchsmusterschrift DE 20 2018 006 365 U1, betitelt "Faservliesformteil" beansprucht ein thermisch verformtes Faserflies, das aus strukturgebenden Polyetheylenterephthalat-Fasern und matrixbildenden Polyethylenterephthalathaltigen Bikomponenten-Bindefasern, welche ein semikristallines Hüllenmaterial mit einem Schmelzbereich von 90°C bis 175°C sowie gegebenenfalls weitere Komponenten aufweisen, gebildet wird. Dieses erfindungsgemäße Faservliesformteil soll u.a. als Kofferraumseitenwand oder Hutablage verwendet werden.

Die Gebrauchsmusterschrift DE 20 2021 103 471 U1, betitelt "Verbundmaterial auf Vliesstoffbasis" beansprucht ein Fahrzeuginnenraumverkleidungsmaterial, bestehend aus mindestens zwei übereinander angeordnete, in vertikale Schlaufen gelegte Vliesstoffbahnen, die jeweils auf einer Mischung von Stapelfasern, welche Bindefasern enthält, basieren.

### Zusammenfassung und Aufgabe der Erfindung

Zusammenfassend kann festgestellt werden, dass Leichtbau-Verbundformkörper in Fahrzeuginnenräumen anfangs mittels einfacher Textilvliesstoffe hergestellt wurden. Hierzu wurden phenolharzgebundene Vliesstoffe, deren Faservlies aus organischen Fasern wie Wolle, Baumwolle, Zellwolle, Polyester- und Acrylfasern bestehen, verwendet. Ein Großteil dieser Fasern wurde aus Textilabfällen über einen Reißprozess gewonnen. Ein Beispiel hierzu ist die Innenverkleidung eines PKW-Daches, "Fertighimmel" genannt, aus Textilvlies (siehe Arnold Gardziella "Duroplastische Harze, Formmassen und Werkstoffe", Kontakt & Studium, Band 599, 2000, Seite 103). Weitere konkrete Beispiele sind die Herstellung von Hutablagen und Kofferraumauskleidungen von Kraftfahrzeugen aus phenolharzgebundenen Textilfilzen (siehe A. Gardziella, L.A. Pilato, A. Knop "Phenolic Resins, Springer Verlag Berlin, 2000, Seiten 180 - 182).

Für die Herstellung von glasfaserverstärkten Innenbauteilen im Flugzeugbau wurden modifizierte Phenolharze eingesetzt. Darüber hinaus wurden Kombinationen aus Epoxydharz und Phenolharz in Composites verwendet, die beispielsweise in der Nutzfahrzeugindustrie für Schienenfahrzeuge, Omnibusse, LKW und Magnetbahnen Verwendung fanden. Ein Beispiel hierzu sind Handgepäckfächer im Innenausbau von Flugzeugen (siehe "Duroplastische Harze, Formmassen und Werkstoffe", Arno Gardziella, Kontakt & Studium, Band 599, 2000, Seite 104).

Man beachte, dass Pressmassen aus Phenolharzen bereits seit den 30er Jahren des 20. Jahrhunderts standardmäßig in großen Mengen verwendet wurden. Ein Zeugnis über die Vielzahl einzelner Harztypen gibt ein Produktkatalog der Bakelite Gesellschaft GmbH aus Exner bei Berlin, betitelt "Bakelite, Seine Herstellung und Verwendung" aus dem Jahr 1937 (dieser Produktkatalog ist im Internet aufrufbar).

Seit den 40er Jahren des 20. Jahrhunderts existierten auch schon kommerziell erhältliche Leichtbauverbundkörper auf der Basis von Sandwichkonstruktionen mit Wabenkern, die mittels Phenolharze gebunden und verdichtet wurden. Diese Wabenkern-Verbundmaterialien wurden vielfach in Schiffen, Flugzeugen und Automobilen verbaut. (siehe A. Gardziella, L.A. Pilato, A. Knop "Phenolic Resins, Springer Verlag Berlin, 2000, Kapital "Honeycomp Core Sandwich Construction" Seiten 268 - 272).

Später stehen die Phenolharze im Wettbewerb mit thermoplastischen Materialien, die sehr geringes Gewicht, eine gute Kombinierbarkeit mit anderen Werkstoffen und hervorragende akustische Isolationseigenschaften aufweisen. Allerdings werden thermoplastische Materialien in Fachkreisen insgesamt als qualitativ nicht hochwertig klassifiziert, da sie sich beispielsweise als Werkstoffe in Kraftfahrzeuginnenräumen bei hohen Außentemperaturen im Sommer thermisch verformen können.

Mit der weiteren Entwicklung der Verfahrenstechnik und den großen Möglichkeiten der Polyurethanchemie, Produkte mit zuvor genau festgelegten Eigenschaften gezielt maßzuschneidern, werden aktuell flächige Leichtbau-Verbundformkörper für Innenräumen vielfach auf der Basis des Diisocyanatpolyadditionsverfahrens hergestellt. Hierzu werden vorrangig Polyurethanschäume verwendet.

Die Verarbeitung von Thermoplasten benötigt in der Regel keine großen Herausforderungen, da die thermoplastischen Materialien in ihrem molekularen Aufbau Endprodukte darstellen. Ihre Verarbeitung erfolgt somit nach rein physikalischen Gesichtspunkten, so dass hier lediglich Schmelz-, Fließ- und Erstarrungsvorgänge eine Rolle spielen.

Völlig anders liegen die Verhältnisse bei der Herstellung von Polyurethanschäumen, da ein wesentlicher Teil der zum Endprodukt führenden chemischen Umsetzungen in die Hand des Verarbeiters gelegt werden muss, der in der Regel nicht über eine eigene chemische Kompetenz verfügt. Bei der Schaumbildung durchlaufen die verschiedenen Reaktionssysteme Zwischenstadien, die durch Abhängigkeit von Druck und Temperatur sowie das Durchlaufen verschiedener Viskositätsstufen gekennzeichnet und damit in gleitenden Übergängen mit einer Folge nicht leicht beherrschbarer Eigenschaften verbunden sind. Die Probleme liegen somit darin, die Aushärtung des Reaktionsgemischs, die Treibmittelwirksamkeit und die Schaumstabilität synchron zu steuern. Zusätzlich zu den beiden oder auch mehreren Hauptkomponenten des Diisocyanatpolyadditionsverfahrens werden zur Herstellung von Polyurethanschäumen noch Zellregler, spezielle Katalysatoren, Stabilisatoren, oberflächenaktive Stoffe, flammhemmende Zusätze, Beimischungen von Weichmachern, Füllstoffe, Pigmente und fungistatisch und/oder bakteriostatisch wirkende Substanzen sowie Duftstoffe benötigt.

Die Reaktionssysteme sind aus diesem Grunde äußerst komplex aufgebaut und die Verarbeitung dieser Systeme ist extrem aufwendig und - trotz entsprechender Absaugtechnik - mit erheblichen Emissionen verbunden, die gesundheitlich schädlich für die an der Herstellung beteiligten Menschen sowie der Umwelt sind, und die mit starken Ausdünstungen einhergehen.

Nahezu alle im Stand der Technik zur Herstellung von flächigen Leichtbau-Verbundformkörpern für Innenräumen verwendeten Reaktionssysteme beruhen im Allgemeinen auf härtbare, synthetische, organische Bindemittel, die durch thermische Polymerisation in einem Pressverfahren den Formkörper bilden. Die dabei eingesetzten molekularen Bausteine, ob Diisocyanate bei den Polyurethanen, Formaldehyd enthaltende Phenolharze oder Epoxidharze, die den Diglycidylether von Bisphenol A aufweisen stehen ausnahmslos auf der Liste des Anhangs XVII der REACH-Verordnung. Diese Liste führt Stoffe auf, die aufgrund unannehmbarer Risiken für die menschliche Gesundheit oder die Umwelt nicht oder nur stark eingeschränkt hergestellt, in Verkehr gebracht oder verwendet werden dürfen. Der Gesetzgeber fordert die Industrie auf, diese gefährlichen Stoffe möglichst adäquat durch weniger gefährliche Stoffe zu ersetzen.

Ein weiterer Nachteil synthetischer organischer Bindemittel oder von Organopolymerschäumen liegt in ihrer beschränkten Temperaturstabilität. Selbst als "nicht entflammbar" klassifizierte Typen können im Brandfall giftige Gase freisetzen und/oder tropfen.

Es besteht derzeit ein großer Wunsch der gesamten Gesellschaft, auf allen Ebenen des täglichen Lebens, nachhaltige Produkte zu entwickeln, zu produzieren und zu verwenden. Ein bedeutsamer Aspekt der Nachhaltigkeit lautet "Klimaneutralität". So unterstützt die Politik die Industrie mit immensen finanziellen Mitteln zur Umstellung ihrer Produkte auf klimaneutrale Varianten. Beispiele sind konkrete Grenzmengenvorgaben an die Automobilindustrie zur CO₂-Emission neu produzierter Autos. Diese Vorgaben betreffen in einem ersten Schritt den Verbrauch an fossilen Energieträgern während des Fahrens. Die Industrie verpflichtete sich zudem zur jährlichen Herstellung einer bestimmten Menge an Elektroautos. Gleichzeitig wurde die Stromindustrie verpflichtet, jährlich eine bestimmte Menge an Strom aus regenerativen Energien zur Verfügung zu stellen. Natürlich bezieht sich die Forderung nach Nachhaltigkeit in der Automobilindustrie nicht nur auf den Kraftstoffverbrauch fossiler Energieträger, sondern auch auf die CO₂ Bilanz eines gesamten Automobils. Mehrere große Automobilkonzerne haben angekündigt, zukünftig das Merkmal "Klimaneutralität" in die Vertragsbedingungen mit ihren Lieferanten aufzunehmen und zu einem wesentlichen Kriterium bei der Auftragsvergabe zu erheben. Dies bedeutet, dass in absehbarer Zukunft nur noch Materialien den Weg in die Automobile finden werden, die in allen Wertschöpfungsstufen bilanziell möglichst CO₂ neutral sind.

Sämtliche synthetischen, organischen Polymeren und Kunststoffe enthalten Kohlenstoff, der derzeit nahezu vollständig aus Erdöl und Erdgas gewonnen wird. Sowohl während der Synthese der Polymerbausteine oder wenn die aus den chemischen Stoffen produzierten Produkte später thermisch verwertet werden oder wenn sie sich am Ende ihres Lebenszyklus zersetzen, immer dann emittieren sie CO₂, das in die Bilanz zur Klimaneutralität einfließt.

Ein weiteres wichtiges gesellschaftliches Vorhaben, das die EU mit ihrem Programm des "Green Deals" vehement vorantreibt, ist die Implementierung einer verbindlichen Kreislaufwirtschaft, die auf eine strikte stoffliche Wiederverwertung von Materialien setzt. Auch dies geschieht unter dem Gesichtspunkt der Nachhaltigkeit.

Es war somit Aufgabe der vorliegenden Erfindung, flächige Leichtbau-Verbundformkörper für Innenräume zur Verfügung zu stellen, die
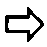 für die Zulieferindustrie einfach herstellbar sind und keine komplexen organischen Reaktionsabfolgen aufweisen,
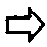 während ihrer Herstellung geruchsarm bleiben und somit keine gefährlichen Stoffe freisetzen,
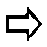 während ihrer Verwendung selbst im Fall eines Brandes keine giftigen Gase freisetzen,
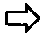 dem Kriterium der Nachhaltigkeit bezüglich der dringenden gesellschaftlichen Forderung nach einer umfassenden industriellen Dekarbonisierung Rechnung tragen, indem die erfindungsgemäßen Verbundkörper zumindest möglichst wenig - im Vergleich zu den Produkten des Standes der Technik - CO₂ während ihrer Lebenszyklen freisetzen und
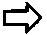 die vollständig wiederverwertet werden können,
wobei die mechanischen Eigenschaften der flächigen Verbundformkörper denen der hochwertigen Formkörper auf Polyurethanbasis nahe-, bzw. gleichkommen.

Gelöst werden diese Aufgaben überraschenderweise durch einen als Sandwich aufgebauten, flächigen Formkörper zur Verwendung in Innenräumen von Gebäuden oder in Innenräumen von Transportmitteln, umfassend a) eine zentrale Kernschicht mit einer Vielzahl von Hohlkörpern, b) ein zur Kernschicht beidseitiges Fasergeflecht und c) ein beidseitig auf das Fasergeflecht aufgetragenes, zumindest teilweise geschäumtes im Wesentlichen anorganisches Bindemittel, umfassend ein Geopolymer, wobei das Geopolymer aus der thermischen Polymerisation einer härtbaren und schäumbaren Zusammensetzung herstellbar ist, die umfasst
- mindestens eine feste steinbildende Phase, bestehend aus Metakaolin,
- mindestens eine wässrige, alkalische Phase,
- mindestens ein Schäumungsmittel und
- mindestens ein Tensid,

wobei die Mehrzahl der gebildeten Schaumzellen des im Wesentlichen anorganischen Bindemittels, umfassend ein Geopolymer, während der thermischen Härtung in dem begrenzten Expansionsraum einer Pressform wieder größtenteils zerstört wird,
oder einen als Sandwich aufgebauten, flächigen Formkörper zur Verwendung in Innenräumen von Gebäuden oder in Innenräumen von Transportmitteln, bestehend aus a) einer zentralen Kernschicht mit einer Vielzahl von Hohlkörpern, b) einem zur Kernschicht beidseitigem Fasergeflecht und c) einem beidseitig auf das Fasergeflecht aufgetragenes, zumindest teilweise geschäumtes im Wesentlichen anorganisches Bindemittel, umfassend ein Geopolymer, wobei das Geopolymer aus der thermischen Polymerisation einer härtbaren und schäumbaren Zusammensetzung herstellbar ist, die umfasst
   - mindestens eine feste steinbildende Phase, bestehend aus Metakaolin,
   - mindestens eine wässrige, alkalische Phase,
   - mindestens ein Schäumungsmittel und
   - mindestens ein Tensid,
wobei die Mehrzahl der gebildeten Schaumzellen des im Wesentlichen anorganischen Bindemittels, umfassend ein Geopolymer, während der thermischen Härtung in dem begrenzten Expansionsraum einer Pressform wieder größtenteils zerstört wird.

Geopolymere sind im Stand der Technik bekannt. Der Begriff "Geopolymer" stammt aus den 70er Jahren des 20. Jahrhunderts vom französischen Chemiker Davidovits und bezeichnet anorganische Polymeren, die sich aus zwei Komponenten zusammensetzten: Zum einen aus einem reaktiven pulverförmigen Feststoff, der in einer Reinform hauptsächlich aus amorpher Kieselsäure und Al₂O₃ besteht und zum anderen aus einer alkalischen Aktivatorlösung. Die chemische Umsetzung der beiden Komponenten, die einer Kondensationsreaktion entspricht, wird als Geopolymerisation bezeichnet. Im thermischen Reaktionsverlauf härtet das Stoffgemisch unter Bildung eines Alumosilikatnetzwerks (ASN) aus.

In der Literatur wird der Begriff "Geopolymer" aber auch für alkalisch aktivierte Hüttensande, die granulierte Hochofenschlacke verwendet. Da Hüttensand Calciumoxid enthält, bilden sich hier - wie im Zementklinker - Hydratphasen aus, die sogenannten CSH- (Calciumsilikathydrat) und CAH- (Calciumaluminathydrat) Phasen. Zudem gibt es weitere analoge Phasen aus Magnesiumsilikat oder Magnesiumsilikathydrat und Eisensilikat oder Eisensilikathydrat bei der Verwendung von Talkum oder Glimmer als reaktiven pulverförmigen Feststoff in einer Geopolymerisation.

Weiterhin ist es möglich, mit Flugasche, die bei der Energieerzeugung in Kohlekraftwerken über Elektrofilteranlagen anfallen oder mit calciniertem Bauxit, Geopolymeren herzustellen.

Eine kompakte Zusammenfassung in der Literatur über Geopolymere findet sich in den "Nachrichten aus der Chemie", 12, 2017, Seiten 1198 - 1202, betitelt "Geopolymere als Spezialbaustoff" von den Autoren Oliver Voigt, Neven Ukrainczyk und Eddie Koenders.

Im Rahmen der vorliegenden Erfindung wird der Begriff "Geopolymer" im erweiterten Sinn verstanden.

Die Geopolymerisation einer erfindungsgemäßen Zusammensetzung kann somit durch alkalische Aktivierung mit Metakaolin erfolgen.

Dies bedeutet, dass das erfindungsgemäße, gehärtete Geopolymer sowohl ASN-Phasen, CSH-Phasen, CAH-Phasen, Magnesiumsilikatphasen, Magnesiumsilikathydratphasen, Eisensilikatphasen und Eisensilikathydratphasen aufweisen kann, die entweder einzeln oder in Kombinationen vorliegen können.

Die alkalische Aktivierung kann durch eine Vielzahl alkalischer Substanzen eingeleitet werden. In der Fachliteratur werden drei Gruppen unterschieden: Erstens Alkalisalze (beispielsweise Carbonate, Sulfate, usw.), zweitens Alkalisilikate und/oder Alkalialuminate und drittens Alkalihydroxide.

Diese Gruppen unterscheiden sich in der Höhe des pH-Wertes und der Art des Anions. Erfindungsgemäß können hier Verbindungen der einzelnen Gruppen sowie Kombinationen aus diesen Gruppen verwendet werden. Erfindungsgemäß bevorzugt wird eine Mischung der Verbindungen aus den Gruppen 2 und 3 eingesetzt, weil so eine Einstellung genauer pH-Werte ermöglicht wird. Der alkalische Aktivator kann zusätzliche geeignete Verbindungen enthalten wie beispielsweise Hydroxide, Carbonate oder Oxide von Erdalkalien, Eisen, Titan, Silizium und Aluminium, sowie geeignete Aluminate.

Werden die Feststoffe mit dem flüssigen alkalischen Aktivator zum Bindemittel vermischt, finden mehrere einfache Rektionsschritte, teilweise auch parallel, statt.

Anfangs bewirken die alkalischen Verbindungen die Lösung der reaktiven Feststoffe. Es bilden sich anorganische Monomeren und Oligomeren, wobei mit dem Löseprozess eine Reorganisation der monomeren und oligomeren Bausteine eintritt, die dann durch eine chemische oder thermische Aktivierung in einer Kondensationsreaktion unter Polymerbildung zu alumosilikatischen Netzwerken und/oder zu Calciumsilikathydraten mit Aluminiumeinbau und/oder zu analogen anderen Netzwerkphasen aushärten und das Geopolymer bilden.

Geopolymere sind ebenfalls aus der Patentliteratur bekannt.

Die Offenlegungsschriften DE 32 46 602 A1 und DE 32 46 604 A1, beide betitelt "Wasserhaltige härtbare Formmassen auf Basis von anorganischen Bestandteilen, daraus hergestellte Formkörper und Verfahren zur Herstellung der Formmasse" beschreiben Formkörper hoher Biegebruchfestigkeit, die durch Gießen oder Pressen durch thermische Geopolymerisation der wasserhaltigen Formmassen hergestellt werden. Verwendet werden diese Formkörper für technische Zwecke, die hocherhitzten keramischen Formkörpern vorbehalten sind sowie für den Bereich des Hochbaus als Wandmaterial oder für die Deckung von Dächern.

Die US 6,992,027 B1, betitelt "COMPOSITE PANEL WITH FIRE RESISTANT FACE SHEET" beschreibt Laminat Strukturen mit einer zentralen Wabenstruktur, beidseitigen Klebeschichten aus Phenolharzen und beidseitigen mit einem Geopolymer imprägnierten Deckschichten. Schäumbare Geopolymerzusammensetzungen werden nicht offenbart.

Die Offenlegungsschrift DE 35 12 516 A1, betitelt "Anorganische Formmasse mit Elektrofilterasche als steinbildende Komponente" offenbart Formkörper hoher Biegefestigkeit, die zur Verkleidung von Wänden oder für die Deckung von Dächern in Art von Schieferplatten, Klinkern oder Bekleidungen brauchbar sind.

Ein gleiches Anwendungsprofil beschreibt die DE 35 12 515 A1, betitelt "Anorganische Formmasse mit kalziniertem Bauxit als steinbildende Komponente".

Die Offenlegungsschrift DE 32 36 619 A1, betitelt "Schäumbare wasserhaltige anorganische Formmasse, daraus hergestellte Formkörper und Verfahren zur Herstellung der Formmasse" betrifft fließfähige wasserhaltige Formmassen auf Basis von alkalihaltigen anorganischen Bestandteilen sowie Schäummitteln, welche durch Gießen in Formen und Erwärmen geschäumte Formkörper bilden sowie Verfahren zur Herstellung solcher Formmassen und die daraus herstellbaren zumindest teilweise geschäumten Formkörper.

Derartige Formmassen waren unter der Marke "Trolit^{®}" im Handel verfügbar. Nachteilig an diesen Formkörpern soll ihre geringe Stoß- und Schlagfestigkeit gewesen sein. Zur Behebung dieser Schwäche werden in der Offenlegungsschrift DE 101 26 713 A1, betitelt "Silikatisch abbindende Formmasse und daraus hergestellte Formkörper" das anorganische Bindemittel mit einem organischen Bindemittel auf Basis eines Phenolharzes vom Typ Resol modifiziert. Die Verwendung dieser Formmassen ist als Isoliermaterial und für den Einsatz in der Feuerfestindustrie vorgesehen. In dem parallelen Dokument DE 101 26 714 A1, betitelt "Verbundwerkstoffe, Verfahren zu ihrer Herstellung und Verwendung", werden Oberflächen oder Teile von Oberflächen gehärteter und geschäumter Formteile aus silikatisch gebundenen Formmassen mit phenolharzgebundenen flächigen Verstärkungsmaterialien kaschiert. Die Verwendung dieser Werkstoffe ist als Deckplatten bei der Tunnelabdichtung, als Fußbodenplatten, zur Herstellung von Lärmschutzwänden, im Fahrzeugbau und zur thermischen Isolierung von Maschinen und Gebäuden angedacht.

In der DE 101 63 590 A1, betitelt "Verfahren zur Herstellung eines Verbundstoffes und Isolierkörper, insbesondere für eine Brenner- und Kesseltür" wird ebenfalls als anorganische Formmasse "Trolit^{®}" in Verbindung mit H₂O₂ als Schäummittel eingesetzt.

In der EP 0 561978 B1, betitelt "Verfahren zur Herstellung von feinporigem Schaum aus im Wesentlichen anorganischen Bestandteilen" werden Formmassen zur Herstellung eines festen, geschlossenporigen Schaumproduktes geschützt, deren Zusammensetzung eine anorganische, steinbildende Komponente, einen alkalischen Härter und eine schaumbildende Komponente aufweist, wobei die geschlossenporige Struktur durch einen amphiphilen Emulgator erreicht werden soll. Der Zusammensetzung können auch organische Kunstharze zugesetzt werden.

Die DE 10 2014 003 104 A1, betitelt "Alkali-Alumosilikat-Schaum- oder -Blähmassen oder -körper sowie Verfahren zu deren Herstellung und deren Verwendung" offenbart ein Verfahren zur Herstellung von Schaummassen ausgehend von Alumosilikaten und einem alkalischen Aktivator, wobei vor Aushärtung der Geopolymermatrix ein Schäumungsvorgang stattfindet. Die Schaummassen sollen als Dämmstoffe, zur feuerfesten Verwendung, als Bauprodukte oder als Zuschlagstoffe für Mörtel und Putze Verwendung finden.

Die US 5,244,726, betitelt "Advanced geopolymer composites" beansprucht einen selbsthärtenden, geschäumten Verbundwerkstoff auf Basis einer Alkalimetallsilikatgrundlage, die bei Raumtemperatur aushärten soll.

Sowohl in der WO 2015/062860 A1, betitelt "GEOPOLYMERSCHAUM-FORMULIERUNG FÜR EIN NICHT BRENNBARES, SCHALLABSORBIERENDES, WÄRMEDÄMMENDES GEOPOLYMERSCHAUMELEMENT", als auch in der WO 2018/189151 A1, betitelt "VERFAHREN ZUR HERSTELLUNG EINES ANORGANISCHEN SCHAUMS UND DESSEN VERWENDUNG" werden Zusammensetzungen eines Geopolymerschaums, Verfahren zur Herstellung der Zusammensetzungen, Verwendungen der Zusammensetzungen und Formkörper der Zusammensetzungen offenbart.

Weitere Geopolymerpatentdokumente, in denen Geopolymerformulierungen vorgeschlagen werden, sind in den Druckschriften EP 2 467 349 B1, betitelt "Ciment geopolymerique et son untilisation", US 9,950,451 B2, betitelt "Method of manufacture of products from geopolymer composite", US 7,745,363 B2, betitelt "Geopolymer composites and structures formed therefrom", US 9,321,681 B2, betitelt "Dimensionally stable geopolymer compositions and method", WO 2021/111011 A1, betitelt "Mousse géopolymère à cellules fermées".

Ein interessantes Anmeldungsdokument ist die US 2008/0185749 A1, betitelt "Sodium silicate treated fibrous composites", da sich der Anwendungsbereich mit dem der vorliegenden Erfindung deckt. Die Verbundwerkstoffe aus der US-Anmeldung sollen ebenfalls für einen Einsatz als flächige Formkörper für Innenraumanwendungen in Kraftfahrzeugen oder in Gebäuden geeignet sein. Explizit genannt sind hier Autohimmel und Kofferraumabdeckungen im Automobilbereich sowie Decken- oder Bodenplatten im Baubereich.

Die WO 2019/129398 A1, betitelt "VERFAHREN ZUR HERSTELLUNG VON BRANDSCHUTZMATERIALIEN AUF WASSERGLSBASIS" beschreibt einen als Sandwich aufgebauten Formkörper mit einer zentralen Kernschicht mit Wabenstruktur, ein beidseitig zur Kernschicht vorhandenes Fasergeflecht, wobei der Formkörper mit einem geschäumten Geopolymer imprägniert wird. Dieser Formkörper weist im Gegensatz zum Formkörper der vorliegenden Erfindung allerdings zur Ausbildung guter Wärmedämmeigenschaften zwingend die Ausbildung einer gleichmäßigen, feinen Schaumstruktur über den gesamten Bereich der Blähmasse auf, weil diese Schaumzellen eine Vielzahl isolierender Körper bilden, während bei den vorliegenden Formkörpern die Schaumstruktur lediglich intermediär gebildet und während der thermischen Härtung in einem begrenzten Expansionsraum einer Pressform zum Formkörper wieder größtenteils zerstört wird.

Die WO 2016/000026 A1, betitelt "METHOD FOR PRODUCING A STRCTURAL ELEMENT" beschreibt Platten oder Bretter zur Verwendung im Baubereich. Offenbart werden Strukturelemente in Form von Verbundplatten, die einen Zementkern aufweisen, der von kommerziell erhältlichen Faserzementplatten umfasst ist. Das mineralische Bindemittel des Zementkerns kann ein Geopolymer und/oder einen Portland Zement (beispielsweise eine Mischung aus beiden) umfassen. Es können zudem organische Bindemittel zur Verbesserung der Eigenschaften zugesetzt werden. Auch sollte ein Schäumungsmittel zugesetzt werden, wenngleich dieses nicht unbedingt erforderlich ist, da die beiden Faserzementplatten der Verbundplatte ihre strukturellen Eigenschaften verleihen. Zur Herstellung der Verbundplatte wird eine Faserzementplatte auf den Boden einer oben offenen Form gelegt, die Zementmischung wird dann in die Form gegossen, gleichmäßig über die Faserzementplatte verteilt und schließlich mit der zweiten Faserzementplatte bedeckt. Diese Anordnung härtet dann in der offenen Form aus.

Keines der im Stand der Technik recherchierten Dokumente offenbart oder legt nahe einen als Sandwich aufgebauten, flächigen Formkörper zur Verwendung in Innenräumen von Gebäuden oder in Innenräumen von Transportmitteln, umfassend a) eine zentrale Kernschicht mit einer Vielzahl von Hohlkörpern, b) ein zur Kernschicht beidseitiges Fasergeflecht und c) ein beidseitig auf das Fasergeflecht aufgetragenes, zumindest teilweise geschäumtes im Wesentlichen anorganisches Bindemittel, umfassend ein Geopolymer, wobei das Geopolymer aus der thermischen Polymerisation einer härtbaren und schäumbaren Zusammensetzung herstellbar ist, die umfasst
- mindestens eine feste steinbildende Phase, bestehend aus Metakaolin,
- mindestens eine wässrige, alkalische Phase,
- mindestens ein Schäumungsmittel und
- mindestens ein Tensid,
wobei die Mehrzahl der gebildeten Schaumzellen des im Wesentlichen anorganischen Bindemittels, umfassend ein Geopolymer, während der thermischen Härtung in dem begrenzten Expansionsraum einer Pressform wieder größtenteils zerstört wird.

Der Begriff "im Wesentlichen" bedeutet im Rahmen der vorliegenden Erfindung, dass das Bindemittel "hauptsächlich" (OpenThesaurus.de) oder "im Großen und Ganzen" (Wiktionary.de) ein anorganisches Bindemittel ist. Der Begriff soll zum Ausdruck bringen, dass der Zusatz weiterer geringfügiger, nicht störender Mengen an organischen Substanzen, die kompatibel mit dem härtbaren anorganischen Bindemittel sind, ebenfalls vom Schutzbereich erfasst sind. Insofern weist ein im Wesentlichen anorganisches Bindemittel wenigstens 90 Gew.-%, vorzugsweise wenigstens 95 Gew.-% und besonders bevorzugt wenigstens 100 Gew.-% bezogen auf den Feststoffgehalt an Geopolymer auf.

Erfindungsgemäß ist ein als Sandwich aufgebauter, flächiger Formkörper zur Verwendung in Innenräumen von Gebäuden oder in Innenräumen von Transportmitteln, der aus einer zentralen Kernschicht a) besteht, deren stoffliche Zusammensetzung ausgewählt ist aus der Gruppe bestehend aus natürlichen Fasern, dünnen Metallfolien, anorganischen Fasern, gegebenenfalls beschichtet sowie organisch-synthetischen Fasern. Die zentrale Kernschicht weist eine Vielzahl von Hohlkörpern auf und befindet sich zwischen zwei Deckschichten in Form von Fasergeflechten b), deren stoffliche Zusammensetzungen unabhängig voneinander ausgewählt sind aus der Gruppe bestehend aus organisch-synthetischen Fasern, natürlichen Fasern, anorganischen Fasern und metallischen Fasern, gegebenenfalls beschichtet. Dieser Sandwichverbund wird mit einem schäum- und härtbaren, im Wesentlichen anorganischen, flüssigen Bindemittel so behandelt, dass das Bindemittel die Deckschichten und die Kernschicht wenigstens teilweise durchdringt und von den Deckschichten und der Kernschicht aufgenommen oder dort adsorbiert wird. Dies kann durch beidseitiges Besprühen der Deckschichten mit dem Bindemittel, durch ein Tränkverfahren oder durch ein Gießverfahren bewerkstelligt werden. Erfindungsgemäß bevorzugt ist das beidseitige Besprühen der Deckschichten. Erfindungsgemäß bevorzugt beträgt der Auftrag des Bindemittels zwischen 100 g/m² und 900 g/m². Es entsteht so kurzzeitig ein entsprechender mit dem Bindemittel imprägnierter Rohling, der im Sinne der Erfindung ebenfalls als erfindungsgemäß offenbart wird. Der erfindungsgemäße Rohling wird dann in einer Polymerisation unter Temperatur und Druck in einem bevorzugten Temperaturbereich von 100°C bis 140°C und einem bevorzugten Druckbereich von 1,1 bis 4 bar einem Pressverfahren unterworfen, in dem die beiden Deckschichten mit der Kernschicht verbunden werden.

Ein erfindungsgemäßer Aspekt ist somit auch ein als Sandwich aufgebauter, flächiger härtbarer Rohling eines Formkörpers, umfassend a) eine zentrale Kernschicht mit einer Vielzahl von Hohlkörpern, b) ein zur Kernschicht beidseitiges Fasergeflecht und c) ein beidseitig auf das Fasergeflecht aufgetragenes, schäumbares im Wesentlichen anorganisches Bindemittel, umfassend ein Geopolymer oder ein als Sandwich aufgebauter, flächiger härtbarer Rohling eines Formkörpers, bestehend aus a) einer zentralen Kernschicht mit einer Vielzahl von Hohlkörpern, b) einem zur Kernschicht beidseitigem Fasergeflecht und c) einem beidseitig auf das Fasergeflecht aufgetragenes, schäumbares im Wesentlichen anorganisches Bindemittel, umfassend ein Geopolymer.

In umfangreichen eigenen Versuchen konnten die Erfinder zeigen, dass erfindungsgemäße als Sandwich aufgebaute flächige Formkörper zur Verwendung in Innenräumen von Gebäuden oder in Innenräumen von Transportmitteln nur mithilfe von geschäumten Geopolymeren herstellbar sind. Es hat sich überraschenderweise gezeigt, dass ausschließlich die geschäumte Bindemittelvariante zu einer genauen Konturierung der erfindungsgemäßen Formkörper führt und das Bindemittel überhaupt die zentrale Kernschicht effektiv infiltriert. Erfindungsgemäß bevorzugt wird der Schaum durch Bildung von Sauerstoff generiert, der mittels Zerfalls von Peroxiden freigesetzt wird.

Aus vielen eigenen Studien sind die Erfinder zu der Erkenntnis gelangt, dass sich die folgenden Schritte während der Herstellung der erfindungsgemäßen Formkörper bezüglich der Schaumbildung abspielen:
Durch den bevorzugten Vorgang des Besprühens wird die härt- und schäumbare Geopolymerzusammensetzung oberflächlich auf die beiden Deckschichten aufgetragen. Dieser Formkörperrohling wird dann in die vorgeheizte Pressform eingelegt. Das statische Sandwichgebilde mit zentralem Kern und den beiden Deckschichten befindet sich somit in einem nun begrenzten Expansionsraum der Pressform. An den ebenen äußeren Flächen des Bauteils entsteht ein Druck auf das Bindemittel, während die Pressform schließt.

Es wird angenommen, dass durch den externen Druck und die geringe Materialhöhe anfangs nach Schließen der Pressform an den ebenen Flächen oberflächlich keine ausgeprägte und geordnete Schaumbildung zustande kommt.

Anders verhält sich die Situation an den Radien und Kanten der Formkörperaußenhaut. Hier schäumt das Material auf und füllt die vorhandenen Hohlräume aus. Dieser Effekt führt zu der benötigten passgenauen Konturierung der erfindungsgemäßen Formkörper während des Pressvorgangs.

Parallel mit dem äußeren Druck beginnt mit der nun einsetzenden dynamischen Sauerstoffproduktion durch den Peroxidzerfall die Expansion der Geopolymersuspension in die Pressform hinein. Die Geopolymerzusammensetzung baut durch die Gasbildung einen eigenen, nach innen gerichteten Druck auf. Der Druck veranlasst das Geopolymer durch die Hohlräume des Fasergeflechts zu kriechen und sie auszufüllen. Dieser Druck wird auch benötigt, um das Bindemittel durch das Deckplattengewebe zu transportieren. Diese Expansion muss so weit gehen, dass das Bindemittel den zentralen Kern infiltriert. Dies ist seine Aufgabe, da es schließlich den Kern mit den Deckschichten verbinden muss. In dem Moment, in dem das Bindemittel die Stege der Kernschicht erreicht hat, lässt der nun vorhandene größere Raum der Hohlraumzellen ein beschleunigtes Aufschäumen zu. Gleichzeitig entsteht aber ein dynamisches Gleichgewicht zwischen Bildung und Abbau dieser Schaumzellen, denn die Mehrzahl dieser Schaumzellen wird durch den im Bindemittel vorhandenen und den durch die Polykondensation freigesetzten Wasserdampf wieder zerstört. Wie viele eigene Analysen zeigen, resultiert dieser Prozess aber überraschenderweise darin, dass das Bindemittel nur an den Rändern der Hohlkörper der zentralen Kernschicht in einer sehr dünnen konkav ausgeformten Schicht adsorbiert oder aufgenommen wird. Dies aber bedingt eine äußerst wirksame Verbindung zwischen den verstärkenden Deckschichten und der Kernschicht. Eine effektive Verbindung zwischen der Kern- und den Deckschichten wird überraschenderweise mit einer äußerst geringen Menge an Bindemittel erreicht. Die Infiltration der zentralen Kernschicht durch das Bindemittel benötigt für diesen Effekt erfindungsgemäß lediglich 1 Gew.-% - 8 Gew.-%, vorzugsweise 1,5 Gew.-% - 6 Gew.-% und besonders bevorzugt 2 Gew.-% - 4 Gew.-%, wobei die die Angaben der Gewichtsprozente auf das Gewicht der Wabe bezogen sind. Diese Ergebnisse wurden durch Untersuchungen an Formkörpern mit Waben aus Papier, Karton oder Pappe sowie an Aluminiumwaben erzielt.

Schätzungsweise beträgt die Anzahl der verbliebenen Schaumzellen weniger als 25 %, wobei die Angaben der Prozentzahl auf die maximal mögliche Menge der Schaumzellen bezogen ist.

Die überraschenden Wirkungen des Geopolymerschaums, der zudem nur zwischenzeitlich gebildet und größtenteils direkt wieder zerstört wird, bestehen einerseits darin, eine exakte äußere Formgebung der flächigen Formkörper auf der Basis eines anorganischen Bindemittels zu gewährleisten und andererseits darin, dass die intermediäre Schaumstruktur des Geopolymers durch ihren Eigendruck offensichtlich in der Lage ist, als anorganische Suspension - denn ein Großteil des Geopolymers ist anfangs der thermischen Härtung noch nicht in Lösung gegangen und somit nicht reaktionsbereit-problemlos durch ein äußerst enges Fasergeflecht zum zentralen Kern zu infiltrieren und dort in minimalen Mengen einen stabilen Verbund des Formwerkstoffs auszubilden.

Diese Befunde deuten auf einen synergistischen Effekt zwischen dem Geopolymerschaum und einem als Sandwich aufgebauten, flächigen Formköper hin.

Die Schaumstruktur der anorganischen Bindemittelsuspension ist - sobald sie gebildet wird - ihr eigenes Vehikel, um sich selbst in die zentrale Kernschicht zu transportieren und - dort angekommen - wieder größtenteils zerstört zu werden, wobei sie aber einen festen Verbund durch dünne, konkave Schichten an den Hohlkörperenden der zentralen Kernschicht gebildet hat.

In vielen eigenen Versuchen konnten die Erfinder die Anzahl der verbliebenen Schaumstrukturen sogar genau ermitteln. Sie fanden heraus, dass die Obergrenze der im Formkörper verbliebenen Schaumzellen bei weniger als 25 % der maximal möglichen Schaumzellen beträgt und die Untergrenze bei 0,5 % der maximal möglichen Schaumzellen liegt. Weiterhin erkannten die Erfinder, dass ein Bereich von 10 % - 1 % der maximal möglichen Schaumzellen bevorzugt ist und dass ein Wert zwischen 5 % und 1,5 % der maximal möglichen Schaumzellen besonders bevorzugt ist.

Diese Werteangaben wurden ermittelt in Untersuchungen zu unterschiedlichen erfindungsgemäßen Formteilen mit verschiedenen Kanten und Radien, Niederpressungen, Wandstärkensprüngen oder Konturverläufen mit unterschiedlichen Höhen. Die Anzahl der verbliebenen Schaumzellen bezogen auf ihre maximal mögliche Anzahl# ist somit unabhängig von den konkreten Formen der erfindungsgemäßen Formteile. Damit kommt dem Wert der im Formkörper verbliebenen Anzahl an Schaumzellen eine besondere Bedeutung zu, denn die Erfinder erkannten zudem durch viele eigene Messungen, dass bei einem Wert zwischen 5% und 1,5 % der maximal möglichen Schaumzellen offensichtlich die Menge des Bindemittels möglichst gering und die mechanischen Eigenschaften des Formkörpers möglichst hoch sind. Der Wert der im Formkörper verbliebenen Schaumzellen bezogen auf die maximal möglichen Schaumzellen stellt somit einen Maßstab für die Qualität des Formköpers dar.

Die technische Lehre der Erfindung umfasst für den Anwender damit zusätzlich noch die Information, wie er anhand des Wertes der im Formkörper verbliebenen Anzahl an Schaumzellen bezogen auf die maximal mögliche Menge der Schaumzellen einen auf die Menge des Bindemittels und auf die mechanischen Eigenschaften des Formkörpers optimierten erfindungsgemäßen Formkörper erhalten kann.

Beispielhaftes Verfahren zur Ermittlung der im Formkörper verbliebenen Schaumzellen:
Für die näherungsweise Bestimmung des Anteils zerstörter Gasblasen im Schaum wird ein Bauteil von 100 cm x 100 cm unter den zur Produktion der Bauteile typischen Bedingungen (2,5 bar Innendruck, 130°C) hergestellt. Das Bauteil enthält 2 Mulden mit einer Fläche von 5 cm x 5 cm.

Der Rand des Bauteils hat eine Breite von 1 cm und eine Länge von 4 x 100 cm. Es ergibt sich eine (Rand-)Fläche von: 4 x (1 cm x 100 cm) = 400 cm² - (4 x 1 cm²) = 396 cm². Die Mulden bestehen wiederum aus Flächen mit Muldenrändern. In den Muldenrändern ist die Blasenzahl durch die Ausbildung von geschäumten Konturen höher als an den freien Flächen. Bei einer Mulde ist die Randfläche 2 x (1 cm x 5 cm) + 2 x (1 cm x 3 cm) = 16 cm², damit ist die gesamte "freie" Fläche der Oberseite (bei 2 Mulden) = 10 000 cm² - 396 cm² - 32 cm² = 9 572 cm². Die Unterseite des Bauteils weist keine Mulden auf, damit ergibt sich für die Fläche des Bauteils 9 572 cm² + 9 604cm² = 19 176 cm².

Ein Schnitt quer durch das Bauteil, in dem mindestens eine Mulde ist, wird durchgeführt.

Auf 10 cm Länge der Fläche werden die Gasblasen gezählt und die Höhe der Geopolymerschicht gemessen.

Die Höhe beträgt im Mittel 1 mm, die Anzahl der gezählten Gasblasen ergibt 9.

Es resultiert eine Fläche von 1 cm². Die Quadratwurzel aus 9 beträgt 3, somit ergeben sich rechnerisch 27 Gasblasen pro 1 cm³. Durch die Fläche von 19 176 cm² ergibt sich bei einer Höhe von 0,1 cm ein Volumen des flächigen Anteils von 1 918 cm³. In der Fläche befinden sich demnach 51 775 Blasen.

In den Rändern der Form und in den Muldenrändern sind die Konturen des Schaums annähernd dreieckig. Auf einer Fläche von 0,5 cm² (1 cm Breite x 1cm Höhe) / 2 befinden sich 8 Gasblasen und damit 16 Gasblasen pro 1 cm². Die Quadratwurzel aus 16 beträgt 4, es resultieren somit 4³ = 64 Gasblasen pro 1 cm³. Das Volumen des Randes berechnet sich nach Querschnitt x Länge, in unserem Fall 0,5 cm² x 200 cm + 0,5 cm² x 198 cm = 199 cm³. Das Volumen der Muldenränder berechnet sich nach 0,5 cm² x 32cm² = 16 cm³. Damit befinden sich im Rand und in den Muldenrändern: 215 cm³ x 64 (Blasen/cm³) = 13 760 Blasen.

Das Volumen des gesamten Geopolymers errechnet sich durch Addition von 215 cm³ + 1918 cm³ = 2 133cm³.

Um die Anzahl der maximal möglichen Gasblasen zu ermitteln, wird unter den Bedingungen der Bauteilherstellung in einem Behälter (2,5 bar Innendruck, 130°C) eine Mischung in einem Becher frei geschäumt und ausgehärtet.

Die Dichte des so hergestellten Schaums beträgt 0,3 g / cm³. Die Dichte des nicht geschäumten, ausgehärteten Geopolymers wird ebenfalls bestimmt, sie beträgt 1,6 g / cm³. Damit hat das Geopolymer in 1 cm³ ein Volumen von 0,3 g / 1,6 g / cm³ = 0,19 cm³. Die Gasblasen weisen somit ein Volumen von 0,81 cm³ auf.

Ein Schnitt durch das geschäumten Geopolymer zeigt einen maximalen Durchmesser der Blasen von 1,2 mm. Die visuelle Inspektion vieler Proben rechtfertigt die Annahme, dass die Gasblasen nahezu gleich groß sind. Damit ist das Volumen einer Blase gleich 0,0007 cm³.

In dem Volumen von 1 cm³ befinden sich demzufolge 895 Blasen.

Bei dem Volumen von 2 133 cm³ wären somit maximal 1 909 035 Blasen möglich. Gezählt wurden 13 760 + 51 775 Blasen = 65 535 Blasen.

Dies ergibt einen prozentualen Wert Gasblasen bezogen auf die maximal mögliche Gasblasenzahl von (65 535/1909 035) x 100 = 3,4 %.

Die angegebenen Werte der gezählten Blasen sind Mittelwerte, die eine Person an 10 unterschiedlichen erfindungsgemäßen Formkörpern ermittelt hat. Für die Schaumblasenzahl in den Flächen resultiert ein Wert von 9 ± 0,4 und für die Zahl in den Rändern und Mulden ein Wert von 8 ± 0,3.

Die weiteren erfindungsgemäßen Aspekte werden somit folgendermaßen zusammengefasst:
1. Aspekt: Die Mehrzahl der gebildeten Schaumzellen des im Wesentlichen anorganischen Bindemittels, umfassend ein Geopolymer, wird während der thermischen Härtung wieder größtenteils zerstört.

Alternativ kann dieser Umstand auch so ausgedrückt werden:
Die Mehrzahl der gebildeten Schaumzellen der anorganischen Bindemittelsuspension wird während der thermischen Härtung zum Formkörper wieder größtenteils zerstört.

Alternativ kann dieser Umstand auch so ausgedrückt werden:
Die Mehrzahl der gebildeten Schaumzellen des mit dem schaum- und härtbaren Bindemittel imprägnierten Rohlings des Formkörpers wird während der thermischen Härtung wieder größtenteils zerstört.

Der Umstand, dass die Mehrzahl der gebildeten Schaumzellen des im Wesentlichen anorganischen Bindemittels, umfassend ein Geopolymer, während der thermischen Härtung wieder größtenteils zerstört wird, wird durch die Begriffskombination "zumindest teilweise geschäumt" ausgedrückt.
2. Aspekt: Die Mehrzahl der gebildeten Schaumzellen des im Wesentlichen anorganischen Bindemittels, umfassend ein Geopolymer, wird während der Härtung in dem begrenzten Expansionsraum einer Pressform wieder größtenteils zerstört.

Alternativ kann dieser Umstand auch so ausgedrückt werden:
Die Mehrzahl der gebildeten Schaumzellen der anorganischen Bindemittelsuspension wird während der Härtung in dem begrenzten Expansionsraum einer Pressform zum Formkörper wieder größtenteils zerstört.

Alternativ kann dieser Umstand auch so ausgedrückt werden:
Die Mehrzahl der gebildeten Schaumzellen des mit dem schaum- und härtbaren Bindemittel imprägnierten Rohlings des Formkörpers wird während der Härtung in dem begrenzten Expansionsraum einer Pressform wieder größtenteils zerstört.

Der Umstand, dass die Mehrzahl der gebildeten Schaumzellen des im Wesentlichen anorganischen Bindemittels, umfassend ein Geopolymer, während der Härtung in dem begrenzten Expansionsraum einer Pressform wieder größtenteils zerstört wird, wird durch die Begriffskombination "zumindest teilweise geschäumt" ausgedrückt.

3. Aspekt: Die Mehrzahl der gebildeten Schaumzellen des im Wesentlichen anorganischen Bindemittels, umfassend ein Geopolymer, wird während der Härtung wieder größtenteils zerstört, wobei die Anzahl der verbliebenen Schaumzellen im Formkörper weniger als 25% und bis zu 0,5% der maximal möglichen Schaumzellen beträgt.

Alternativ kann dieser Umstand auch so ausgedrückt werden:
Die Mehrzahl der gebildeten Schaumzellen der anorganischen Bindemittelsuspension wird während der Härtung wieder größtenteils zerstört, wobei die Anzahl der verbliebenen Schaumzellen im Formkörper weniger als 25% und bis zu 0,5% der maximal möglichen Schaumzellen beträgt

Alternativ kann dieser Umstand auch so ausgedrückt werden:
Die Mehrzahl der gebildeten Schaumzellen des mit dem schaum- und härtbaren Bindemittel imprägnierten Rohlings des Formkörpers wird während der Härtung wieder größtenteils zerstört, wobei die Anzahl der verbliebenen Schaumzellen im Formkörper weniger als 25% und bis zu 0,5% der maximal möglichen Schaumzellen beträgt.

Der Umstand, dass die Mehrzahl der gebildeten Schaumzellen des mit dem schaum- und härtbaren Bindemittel imprägnierten Rohlings des Formkörpers während der Härtung wieder größtenteils zerstört wird, wobei die Anzahl der verbliebenen Schaumzellen weniger als 25% und bis zu 0,5% der maximal möglichen Schaumzellen beträgt, wird durch die Begriffskombination "zumindest teilweise geschäumt" ausgedrückt.

Selbstverständlich sind die Kombinationen sämtlicher erfindungsgemäßer Aspekte untereinander ebenfalls erfindungsgemäß.

Beide Begriffskombinationen "zumindest teilweise geschäumt" und "wieder größtenteils zerstört" machen jede für sich deutlich, dass immer auch Schaumzellen im erfindungsgemäßen Formkörper zugegen sein müssen.

Erfindungsgemäß ist ein als Sandwich aufgebauter, flächiger Formkörper zur Verwendung in Innenräumen von Gebäuden oder in Innenräumen von Transportmitteln, bei dem die stoffliche Zusammensetzung der zentralen Kernschicht a) ausgewählt ist aus der Gruppe bestehend aus natürlichen Fasern, dünnen Metallfolien, anorganischen Fasern, gegebenenfalls beschichtet sowie organisch-synthetischen Fasern, bevorzugt ausgewählt aus natürlichen oder metallischen Fasern.

Erfindungsgemäß ist ebenfalls ein als Sandwich aufgebauter, flächiger Formkörper zur Verwendung in Innenräumen von Gebäuden oder in Innenräumen von Transportmitteln, bei dem die stofflichen Zusammensetzungen der zur Kernschicht beidseitigen Fasergeflechte b) unabhängig voneinander ausgewählt sind aus der Gruppe bestehend aus natürlichen Fasern, metallischen Fasern, anorganischen Fasern, gegebenenfalls beschichtet sowie organisch-synthetischen Fasern, bevorzugt ausgewählt aus anorganischen Fasern.

Erfindungsgemäß bevorzugt werden die natürlichen Fasern ausgewählt aus der Gruppe bestehend aus Kenaf, Kapok, Bast, Urena, Gräser, Reis, Schalen, Bagasse, Baumwolle, Jute, Hanf, Flachs, Seide, Bambus, Sisal, Abaka, Holz und Zellulose, Derivaten der Zellulose, Proteinfasern, Polylactid, Alginat, Chitin und dessen Derivate, Chitosan, Polyisoprenen, biobasierten Polyamiden, Papier, Karton oder Pappe.

Erfindungsgemäß bevorzugt werden die anorganischen Fasern ausgewählt aus der Gruppe bestehend aus Glasfasern, Steinfasern, Basaltfasern, Keramikfasern und Wollastonit.

Erfindungsgemäß bevorzugt werden die organisch-synthetischen Fasern ausgewählt aus der Gruppe bestehend aus Kohlenstofffasern, Polyvinylchlorid, Polyvinylidenchlorid, Polyester, Polyethylenterephthalat, Polybutylenterephthalat, Polyamid, Polyimid, Aramid, Polyamidimid, Polyacrylnitril, Polymethylmethacrylat, Polytetrafluorethylen, Polyethylen, Polypropylen, Polyurethan, Polybenzoxazol, Polybenzimidazol, Polyharnstoff, Melamin, Polystyrol, Polyphenylensulfid, Polyvinylalkohol und Polycarbonat.

Wie aus umfangreichen eigenen Untersuchungen hervorgeht, ist es erfindungsgemäß besonders vorteilhaft, wenn die stoffliche Zusammensetzung der zentralen Kernschicht a) aus Papier, Karton oder Pappe und die des beidseitigen Fasergeflechts b) aus Glasfasern besteht.

Ein besonders bedeutsamer Aspekt der vorliegenden Erfindung scheint die Vielzahl der Hohlkörper zu sein, die die zentrale Kernschicht a) aufweist. Erfindungsgemäß bevorzugt können die Hohlkörper eckige, kegelförmige, zylindrische, runde und/oder sphärische Körper sein. Besonders bevorzugt sind sechsseitig prismatische Körper.

Flächige Formkörper für Automobilinnenräumen weisen in der Regel Niederpressungen, Wandstärkensprünge sowie Konturverläufe mit unterschiedlichen Höhen auf. Dies bedeutet, dass die Formkörper in ihren Konturen und Profilen im Allgemeinen nicht homogen sind. Soll beispielsweise ein flächiger Formkörper eine Griffmulde, einen Freiraum für darunterliegende Bauteile, einen Scharnierenbereich, eine Einsenkung für Kabel oder eine Sollbrucheinprägung für eine kontrollierte Stauchung beim Crash aufweisen, dann wird der flächige Formkörper an dieser Stelle nach Durchlauf des Pressvorgangs über eine gestauchte Stelle verfügen. Dies bedeutet, dass auch die Geometrie der ursprünglichen Hohlkörper der zentralen Kernschicht an dieser Stelle gestaucht wird und ein erfindungsgemäßer flächiger Formkörper in seiner zentralen Kernschicht beliebige geometrische Körper aufweisen kann.

Erfindungsgemäß bevorzugt bestehen die Hohlkörper der zentralen Kernschicht a) somit aus beliebigen geometrischen Körpern in Kombination aus eckigen und/oder kegelförmigen, und/oder zylindrischen und/oder runden und/oder sphärischen Körpern, wobei die Kombination aus beliebigen geometrischen Körpern mit sechsseitig prismatischen Körpern besonders bevorzugt ist.

Erfindungsgemäß können die Hohlräume regelmäßig oder unregelmäßig angeordnet sein, wobei eine regelmäßige Anordnung bevorzugt ist.

Erfindungsgemäß besteht die zentrale Kernschicht aus einem Stück, in dem die geometrischen Körper einlagig oder mehrlagig angeordnet sind. Derartige Kernschichten sind kommerziell erhältlich.

Ein erfindungsgemäß vorteilhafter Aspekt ist somit ein als Sandwich aufgebauter, flächiger Formkörper zur Verwendung in Innenräumen von Gebäuden oder in Innenräumen von Transportmitteln, wobei die Hohlkörper der zentralen Kernschicht a) ausgewählt sind aus beliebigen geometrischen Körpern in Kombination mit eckigen und/oder kegelförmigen und/oder zylindrischen und/oder runden und/oder sphärischen Körpern, wobei die Kombination aus beliebigen geometrischen Körpern mit sechsseitig prismatischen Körpern besonders bevorzugt ist und wobei die Hohlräume der zentralen Kernschicht regelmäßig oder unregelmäßig angeordnet sind, wobei eine regelmäßige Anordnung bevorzugt ist und wobei die zentrale Kernschicht aus einem Stück besteht, in dem die geometrischen Körper einlagig oder mehrlagig angeordnet sind.

Um zu erfindungsgemäßen als Sandwich aufgebaute, flächige Formkörper zur Verwendung in Innenräumen von Gebäuden oder in Innenräumen von Transportmitteln zu gelangen, ist es vorteilhaft, dass die Papier-, Karton- oder Pappwabe ein Papier-, Karton- oder Pappgewicht von 90 g/m² - 140 g/m² bei einer Toleranz von 5 g/m², bestimmt nach ISO 536, aufweist.

Die Wabenhöhe richtet sich nach der Bauteildicke. So werden Wabenhöhen für Hutablagen in Automobilen zwischen 6 - 12 mm und für Kofferraumladeböden in Automobilen zwischen 16 - 20 mm verwendet.

Je nach Anwendungsart sind Papier-, Karton- oder Pappwaben mit Sinuswellenstruktur, die hohe Druckfestigkeiten und hohe Biegesteifigkeiten im späteren Formkörper aufweisen, erfindungsgemäß besonders bevorzugt. Diese Wabenplatten existieren in unterschiedlichen Wellenarten. Zur Einstufung des jeweiligen Wellenprofils müssen die Vorgaben für die Wellenhöhe und die Wellenteilung gleichzeitig erfüllt sein. Der Fachmann unterscheidet Miniwellen (Wellenart G und F), Mikrowelle (Wellenart E), Feinwellen (Wellenart D und B), Mittelwelle (Wellenart C), Grobwelle (Wellenart A) sowie noch gröbere Wellen (Wellenart K). Obwohl alle Wellenarten erfindungsgemäß vorteilhaft sind, haben die Erfinder erkannt, dass insbesondere für Anwendungen der als Sandwich aufgebauten, flächigen Formkörper im Innenraum von Automobilen Wabenplatten mit Sinuswellenstruktur der Grobwellenart A besonders bevorzugt sind. Die Wellenteilung liegt hier zwischen größer 7,9 mm bis kleiner gleich 10,0 mm und die Wellenhöhe zwischen größer gleich 4,0 mm bis kleiner 5,5 mm. Aus diesem Bereich bevorzugt ist eine Wellenteilung von 8 mm bis 9,5 mm und eine Wellenhöhe von 4 mm bis 5,3 mm. Das Flächengewicht liegt im Bereich von 1150 g/m² - 1400 g/m² bei einer Dichte von 51 kg/m³ - 62 kg/m³. Diese Waben werden seriell mit Dicken von 6 bis 95 mm hergestellt und sind kommerziell erhältlich.

Sämtliche Waben aus Papier, Karton oder Pappe bestehen zu 100% aus wiederverwerteten Stoffen.

Weiterhin geht aus den obigen Ausführungen hervor, dass erfindungsgemäß besonders bevorzugte Deckschichten b) aus Glasfasern bestehen. Um zu einem erfindungsgemäßen als Sandwich aufgebauten, flächigen Formkörper zur Verwendung in Innenräumen von Gebäuden oder in Innenräumen von Transportmittel zu gelangen, ist es vorteilhaft, dass das Glas des Glasfasertyps ein sogenanntes E-Glas ist. Dieses Glas ist ein Aluminium-Bor-Silikat Material mit einem Calciumoxid Anteil um die 20 Gew.-%. Das Glas enthält SiO₂ in Mengen zwischen 50 Gew.-% und 60 Gew.-%, Al₂O₃ in einem Anteil um 15 Gew.-%, B₂O₃ in einem Anteil um 7 Gew.-% sowie geringe Mengen an MgO (um die 1 Gew.-%) und Na₂O und K₂O in Mengen von jeweils < 1 Gew.-%.

Vorzugsweise wird das E-Glas in Form eines E-CSM-Glasgewebes (Chopped Strand Mat) verwendet, wobei das Flächengewicht der Glasgewebematten je nach Anwendungszweck des Formkörpers zwischen 100 g/m² und 900 g/m² bei einer Toleranz von +/- 10 % liegt.

Ein weiteres vorteilhaftes Glas ist ebenfalls ein E-Glas, das ECR-Glas, das eine ähnliche Zusammensetzung hat wie oben angegeben, allerdings in einer borfreien Variante vorliegt.

Eigene Versuche haben gezeigt, dass auch Glasfasern der folgenden Zusammensetzung vorteilhaft sind: SiO₂ = 59 Gew.-% - 62 Gew.-%, Al₂O₃ = 12 Gew.-% - 15 Gew.-%, B₂O₃ = 0 Gew.-%, CaO = 20 Gew.-% - 23 Gew.-%, MgO um die 3 Gew.-%, sowie Alkalioxide < 1 Gew.-%.

Eigene Versuche haben gezeigt, dass auch Glasfasern der folgenden Zusammensetzung vorteilhaft sind: SiO₂ = 58 Gew.-% - 68 Gew.-%, Al₂O₃ = 21 Gew.-% - 29 Gew.-%, MgO = 7 Gew.-% - 13 Gew.-% sowie Alkalioxide < 0,8 Gew.-%.

Diese Glasfaserzusammensetzungen sind vom Typ her "Kieselsäure-Aluminium-Erdalkalien-Systeme". Es gibt sie kommerziell erhältlich mit oder ohne Bor.

Eigene Versuche konnten ebenfalls zeigen, dass auch Glasfasern der folgenden Zusammensetzungen vorteilhaft sind: SiO₂ = 60 Gew.-% - 65 Gew.-%, Al₂O₃ = 0,4 Gew.-% - 3,6 Gew.-%, B₂O₃ = 3 Gew.-% - 10 Gew.-%, CaO = 7,0 Gew.-% - 17 Gew.-%, MgO = 2,4 Gew.-% - 3 Gew.-%, K₂O = 0,5 Gew.-% - 1.5 Gew.-%, Na₂O = 14 Gew.-% - 17 Gew.-%. Es gibt sie kommerziell erhältlich mit oder ohne Bor.

Diese Glasfaserzusammensetzungen sind vom Typ her "Kieselsäure-Alkalien-Erdalkalien-Systeme". Es gibt sie kommerziell erhältlich mit oder ohne Bor.

Eigene Versuche haben gezeigt, dass Glasfasern der folgenden Zusammensetzungen ebenfalls vorteilhaft sind: SiO₂ = 58 Gew.-% - 66 Gew.-%, CaO = 5,0 Gew.-% - 9,0 Gew.-%, MgO = 1,0 Gew.-% - 4 Gew.-%, B₂O₃ < 0,5 Gew.-%, K₂O/ Na₂O = 12 Gew.-% - 15 Gew.-%, ZrO₂ = 15 Gew.-% - 19 Gew.-%.

Diese Glasfaserzusammensetzungen sind vom Typ her "Kieselsäure-Zirkon-Alkalien-Systeme".

Die quantitativen Angaben zu den Zusammensetzungen sind als Richtwerte zu verstehen.

Vorteilhafterweise sind die Glasfasern beschlichtet, um die Dauerhaftigkeit der Fasern zu erhöhen.

Ein erfindungsgemäß vorteilhafter Aspekt ist ein als Sandwich aufgebauter, flächiger Formkörper insbesondere zur Verwendung als Hutablage, als Kofferraumladeboden, als Autotürverkleidungsträger oder als Autohimmel, wobei die zentrale Kernschicht a) eine Wabe aus Papier, Karton oder Pappe ist und ein Papier-, Karton- oder Pappgewicht von 90 g/m² - 140 g/m², bestimmt nach ISO 536, aufweist sowie über Wabenhöhen zwischen 6 und 20 mm verfügt, alternativ eine Wabe aus Papier, Karton oder Pappe mit Sinuswellenstruktur der Wellenarten G, F, E, D, B, C, A oder K ist, wobei die Deckschichten b) aus Glasfasern in Form von Glasgewebematten bestehen, das Glas der Fasern ein "Kieselsäure-Aluminium-Erdalkalien-System" oder ein "Kieselsäure-Alkalien-Erdalkalien-System" oder ein "Kieselsäure-Zirkon-Alkalien-System ist und das Flächengewicht der Glasgewebematten zwischen 100 g/m² und 900 g/m² liegt.

Ein erfindungsgemäß besonders bevorzugter Aspekt ist ein als Sandwich aufgebauter, flächiger Formkörper insbesondere zur Verwendung als Hutablage, als Kofferraumladeboden, als Autotürverkleidungsträger oder als Autohimmel, wobei die zentrale Kernschicht a) eine Wabe aus Papier, Karton oder Pappe ist und ein Papier-, Karton- oder Pappgewicht von 90 g/m² - 140 g/m², bestimmt nach ISO 536, aufweist sowie über Wabenhöhen zwischen 6 und 20 mm verfügt, alternativ eine Wabe aus Papier, Karton oder Pappe mit Sinuswellenstruktur der Grobwellenart A, wobei die Deckschichten b) aus Glasfasern in Form von Glasgewebematten bestehen, das Glas der Fasern ein "Kieselsäure-Aluminium-Erdalkalien-System" oder ein "Kieselsäure-Alkalien-Erdalkalien-System" oder ein "Kieselsäure-Zirkon-Alkalien-System ist und das Flächengewicht der Glasgewebematten zwischen 100 g/m² und 900 g/m² liegt.

Ein weiterer erfindungsgemäßer vorteilhafter und besonders bevorzugter Aspekt ist somit auch ein als Sandwich aufgebauter, flächiger härtbarer Rohling eines Formkörpers, umfassend oder bestehend aus a) eine zentrale Kernschicht mit einer Vielzahl von Hohlkörpern, b) ein zur Kernschicht beidseitiges Fasergeflecht und c) ein beidseitig auf das Fasergeflecht aufgetragenes, schäumbares im Wesentlichen anorganisches Bindemittel, umfassend ein Geopolymer mit den oben angeführten vorteilhaften und besonders bevorzugten stofflichen Ausführungsformen der zentralen Kernschicht a) und des zur Kernschicht beidseitigen Fasergeflechts b).

Normalerweise werden sogenannte voll funktionsfähige "blanke" flächige Formkörper von den Zulieferfirmen an die Automobilindustrie verkauft, die von diesen dann selbst, oder von spezialisierten Weiterverarbeitungsbetrieben ein wenig modifiziert werden. Der Arbeitsschritt dieser Modifikation besteht darin, eine oder mehrere Schicht(en), sei es eine (oder zwei) bloße Dekorschicht(en) oder eine (oder zwei) Funktionsschicht(en) einseitig oder beidseitig aufzubringen und so den "blanken" Formkörper zu veredeln. In einigen Fällen wird dieser Weiterverarbeitungsschritt auch von den Tier-1-Lieferanten selbst ausgeführt.

Erfindungsgemäß bevorzugt ist somit auch ein als Sandwich aufgebauter, flächiger Formkörper zur Verwendung in Innenräumen von Gebäuden oder in Innenräumen von Transportmitteln, umfassend oder bestehend aus a) eine zentrale Kernschicht mit einer Vielzahl von Hohlkörpern, b) ein zur Kernschicht beidseitiges Fasergeflecht und c) ein beidseitig auf das Fasergeflecht aufgetragenes, zumindest teilweise geschäumtes im Wesentlichen anorganisches Bindemittel, umfassend ein Geopolymer, wobei der Formkörper von weiteren Strukturelementen d) umschlossen ist, vorzugsweise von Teppich-, Vlies-, Mattenelementen oder Dekorstoffen.

Erfindungsgemäß ist ein als Sandwich aufgebauter, flächiger Formkörper zur Verwendung in Innenräumen von Gebäuden oder in Innenräumen von Transportmitteln, umfassend oder bestehend aus a) eine zentrale Kernschicht mit einer Vielzahl von Hohlkörpern, b) ein zur Kernschicht beidseitiges Fasergeflecht und c) ein beidseitig auf das Fasergeflecht aufgetragenes, zumindest teilweise geschäumtes im Wesentlichen anorganisches Bindemittel, umfassend ein Geopolymer und herstellbar aus der thermischen Polymerisation einer härtbaren und schäumbaren Zusammensetzung, die umfasst
- mindestens eine feste steinbildende Phase, bestehend aus Metakaolin
- mindestens eine wässrige, alkalische Phase,
- mindestens ein Schäumungsmittel und
- mindestens ein Tensid und
optional einen nicht reaktiven Füllstoff, wobei die Mehrzahl der gebildeten Schaumzellen des im Wesentlichen anorganischen Bindemittels, umfassend ein Geopolymer, während der thermischen Härtung in dem begrenzten Expansionsraum einer Pressform wieder größtenteils zerstört wird.

Die erfindungsgemäßen weiteren Komponenten der mindestens einen festen steinbildenden Phase und die der mindestens einen wässrigen, alkalischen Phase sind bereits weiter oben angegeben.

Metakaolin liegt amorph als Al₂Si₂O₇ vor und weist als pulverförmige Reaktionskomponente gut verfügbares SiO₂ und Al₂O₃ in großen Mengen zur Umsetzung auf. Ganz besonders bevorzugt ist eine Metakaolin Variante mit einem Schüttgewicht von 350 +/- 150 kg/m³ und einem Maximum in der Korngrößenverteilung zwischen 7 µm und 8 µm. Die Menge an Metakaolin liegt in einem Gewichtsbereich zwischen 42,0 Gew.-% und 63,2, Gew.-%, vorzugsweise zwischen 47,3 Gew.-% und 57,9 Gew.-% und besonders bevorzugt bei 52,6 Gew.-% bezogen auf den Feststoffgehalt des Bindemittels.

Erfindungsgemäß besonders bevorzugt ist die Verwendung eines alkalischen wässerigen Aktivators, der umfasst Alkalisilikate, wobei das Gewichtsverhältnis SiO₂ zu Alkoxid pro Liter Lösung zwischen 2,5 und 3,9, vorzugsweise zwischen 2,9 und 3,5 liegt und der pH-Wert einer 1:100 verdünnten Lösung der mindestens einen wässrigen, alkalischen Phase gemäß DIN 38404-5:20098-07 zwischen 10 und 11 liegt und die elektrische Leitfähigkeit einer 1:100 verdünnten Lösung der mindestens einen wässrigen alkalischen Phase gemäß DIN EN 27888:19983-11 zwischen 2000 µS/cm und 3000 µS/cm liegt und wobei die Menge der alkalischen Phase in einem Gewichtsbereich zwischen 35,4 Gew.-% und 53,0 Gew.-%, vorzugsweise zwischen 39,8 Gew.-% und 48,6 Gew.-% und besonders bevorzugt bei 44,2 Gew.-% bezogen auf den Feststoffgehalt des Bindemittels liegt.

Geeignete erfindungsgemäße gasbildende Schäumungsmittel sind beispielsweise Peroxidverbindungen wie Persulfate, Percarbonate, Perborate sowie anorganische oder organische Peroxide. Vorteilhaft ist die Verwendung von Natriumperborat, das eine Additionsverbindung aus Natriumborat und H₂O₂ ist. Weiterhin geeignet sind Wasserstoffperoxid oder Metallpulver wie Zink- oder Aluminiumpulver in phlegmatisierter oder unphlegmatisierter Form.

Erfindungsgemäß bevorzugt ist die Verwendung von Wasserstoffperoxid in wässriger Lösung.

Erfindungsgemäß bevorzugt wird ein Zusatz von Katalysatoren zur wässrigen Lösung des Wasserstoffperoxids, um die Zersetzung des H₂O₂ zu beschleunigen. Als Katalysatoren kommen die katalytisch wirkenden Übergangsmetalle wie Ag-, Au-, Cr-, Mn-, Fe-Ionen sowie Nichtmetallionen wie I⁻ und OH⁻ zum Einsatz.

Erfindungsgemäß besonders bevorzugt ist ein Schäumungsmittel, bestehend aus H₂O₂, sowie einen Katalysator zur Zersetzung des Peroxids, vorzugsweise ein Übergangsmetallsalz, wobei der Gewichtsbereich des H₂O₂ zwischen 0,17 Gew.-% und 0,45 Gew.-%, vorzugsweise zwischen 0,24 Gew.-% und 0,38 Gew.-% und besonders bevorzugt bei 0,31 Gew.-% bezogen auf den Feststoffgehalt des Bindemittels liegt und der Gewichtsbereich des Übergangmetallsalzes zwischen 0,001 Gew.-% und 0,013 Gew.-%, vorzugsweise zwischen 0,004 Gew.-% und 0,010 Gew.-% und besonders bevorzugt bei 0,007 Gew.-% bezogen auf den Feststoffgehalt des Bindemittels liegt.

Die erfindungsgemäßen Tenside sind die Tenside, die im alkalischen Milieu die Schaumbildung unterstützen, somit sind alle nicht-kationischen Tenside umfasst.

Erfindungsgemäß können anionische Tenside, nicht ionische Tenside und amphotere Tenside verwendet werden.

Anionische Tenside verfügen in der Regel über einen unpolaren strukturellen Teil, den ein Alkylrest auszeichnet sowie einen polaren negativ geladenen Teil, der eine funktionelle Gruppe bildet, wie beispielsweise eine Carboxylat-, eine Sulfonat- oder eine Sulfatgruppe.

Beispiele erfindungsgemäßer anionischer Tenside sind Alkylsulfate wie Laurylsulfat, Alkylcarboxylate, Alkylbenzolsufonate, Alkansulfonate, Fettalkoholsulfate, Alkylethersulfate, Sulfoacetate, Sulfosuccinate, sowie die entsprechenden alkoxylierten Varianten.

Nichtionische Tenside verfügen über keine dissoziierbaren funktionellen Gruppen, sind in Wasser löslich, aber bilden keine Ionen, obwohl es auch bei ihnen einen polaren und einen unpolaren Molekülabschnitt gibt.

Typische erfindungsgemäße Vertreter sind Fettalkohole, die in ihren unpolaren Molekülabschnitten lange Kohlenstoffketten tragen und die Verbindungen mit einer polaren Hydroxylgruppe abschließen. Durch den Einbau von Alkoxy-Einheiten können diese Verbindungen stärker hydrophiliert werden. Beispiele sind die verschiedenen Fettalkoholalkoxylate.

Weitere Beispiele erfindungsgemäßer nicht ionischer Tenside sind Alkylglucoside sowie Alkylphenolethoxylate sowie das Kokosfettsäurediethanolamid.

Amphotere Tenside verfügen sowohl über eine positiv geladene funktionelle Gruppe als auch über eine negativ geladene funktionelle Gruppe. Und sie weisen wie alle Tenside auch einen unpolaren Teil im Molekül auf.

Erfindungsgemäße Vertreter dieser Gruppe sind Verbindungen mit Betainstruktur, insbesondere alkalilösliche Betaintenside wie Kokosfettsäureamidopropylbetain.

Erfindungsgemäß können die verschiedenen Tensidtypen einzeln oder auch in Kombinationen verwendet werden. Vorzugsweise werden mehrere unterschiedliche Tenside in Kombination eingesetzt. Umfangreiche eigene Untersuchungen haben gezeigt, dass in einer erfindungsgemäß besonders bevorzugten Ausführungsvariante anionische Tenside zusammen mit nicht-ioinischen Tensiden kombiniert werden. Besonders erfindungsgemäß wird eine Kombination eines anionischen Tensids mit einem nicht-ionischen Tensid verwendet, wobei der Gewichtsbereich der Tenside zwischen 2,35 Gew.-% und 3,55 Gew.-%, vorzugsweise zwischen 2,65 Gew.-% und 3,25 Gew.-%, besonders bevorzugt bei 2,95 Gew.-% bezogen auf den Feststoffgehalt des Bindemittels liegt und das Gewichtsverhältnis des anionischen Tensids zu dem nicht-ioinischen Tensid in einem Bereich zwischen 1,5:1 und 5:1, vorzugsweise zwischen 2:1 und 4,5:1 und am meisten bevorzugt bei 3,9:1 liegt.

Erfindungsgemäß bevorzugt ist ein als Sandwich aufgebauter, flächiger Formkörper zur Verwendung in Innenräumen von Gebäuden oder in Innenräumen von Transportmitteln, umfassend a) eine zentrale Kernschicht mit einer Vielzahl von Hohlkörpern, b) ein zur Kernschicht beidseitiges Fasergeflecht und c) ein beidseitig auf das Fasergeflecht aufgetragenes, zumindest teilweise geschäumtes im Wesentlichen anorganisches Bindemittel, umfassend ein Geopolymer, wobei das Geopolymer erhältlich aus der thermischen Polymerisation einer härtbaren und schäumbaren Zusammensetzung ist, die umfasst
- mindestens eine feste steinbildende Phase, die aus Metakaolin besteht,
- mindestens eine wässrige, alkalische Phase, die ausgewählt ist aus der Gruppe bestehend aus Alkalisalzen, Alkalisilikaten, Alkalialuminaten und Alkalihydroxiden sowie optional aus Hydroxiden, Carbonaten und Oxiden von Erdalkalien, Eisen, Titan, Silizium und Aluminium und Aluminaten,
- mindestens ein Schäumungsmittel, das ausgewählt ist aus der Gruppe bestehend aus Peroxidverbindungen, sowie einem Katalysator zur Zersetzung des Peroxids,
- mindestens ein Tensid, das ausgewählt ist aus der Gruppe bestehend aus anionischen, nicht-ionischen und amphoteren Tensiden und
- optional einen nicht reaktiven Füllstoff,

wobei das Mengenverhältnis der mindestens einen festen steinbildenden Phase zur mindestens einen alkalischen Phase bezogen auf Feststoffgehalt im Bereich von 30:70 bis 70:30, vorzugsweise von 40:60 bis 60:40 und am meisten bevorzugt bei 54,4:45,6 liegt und
wobei die thermische Polymerisation des im Wesentlichen anorganischen Bindemittels in einem Temperaturbereich zwischen 60 °C und 180° C, vorzugsweise in einem Temperaturbereich zwischen 100°C und 140° erfolgt.

Ein alternativer erfindungsgemäßer Aspekt ist somit auch ein als Sandwich aufgebauter, flächiger härtbarer Rohling eines Formkörpers umfassend a) eine zentrale Kernschicht mit einer Vielzahl von Hohlkörpern, b) ein zur Kernschicht beidseitiges Fasergeflecht und c) ein beidseitig auf das Fasergeflecht aufgetragenes, schäumbares im Wesentlichen anorganisches Bindemittel, umfassend ein Geopolymer, der die oben angegebenen Ausgestaltungsformen aufweist.

Wie aus umfangreichen eigenen Untersuchungen hervorgeht, ist erfindungsgemäß besonders bevorzugt ein als Sandwich aufgebauter, flächiger Formkörper zur Verwendung in Innenräumen von Gebäuden oder in Innenräumen von Transportmitteln, umfassend a) eine zentrale Kernschicht mit einer Vielzahl von Hohlkörpern, b) ein zur Kernschicht beidseitiges Fasergeflecht und c) ein beidseitig auf das Fasergeflecht aufgetragenes, zumindest teilweise geschäumtes im Wesentlichen anorganisches Bindemittel, umfassend ein Geopolymer, wobei das Geopolymer erhältlich aus der thermischen Polymerisation einer härtbaren und schäumbaren Zusammensetzung ist, die umfasst
- mindestens eine feste steinbildende Phase, bestehend aus Metakaolin, wobei die Menge an Metakaolin in einem Gewichtsbereich zwischen 42,0 Gew.-% und 63,2 Gew.-%, vorzugsweise zwischen 47,3 Gew.-% und 57,9 Gew.-% und besonders bevorzugt bei 52,6 Gew.-% bezogen auf den Feststoffgehalt des Bindemittels liegt,
- mindestens eine wässrige, alkalische Phase, umfassend Alkalisilikate, wobei das Gewichtsverhältnis SiO₂ zu Alkalioxid pro Liter Lösung zwischen 2,5 und 3,9, vorzugsweise zwischen 2,9 und 3,5 liegt und der pH-Wert einer 1:100 verdünnten Lösung der mindestens einen wässrigen, alkalischen Phase gemäß DIN 38404-5:20098-07 zwischen 10 und 11 liegt und die elektrische Leitfähigkeit einer 1:100 verdünnten Lösung der mindestens einen wässrigen alkalischen Phase gemäß DIN EN 27888:19983-11 zwischen 2000 µS/cm und 3000 µS/cm liegt und wobei die Menge der alkalischen Phase in einem Gewichtsbereich zwischen 35,4 Gew.-% und 53,0 Gew.-%, vorzugsweise zwischen 39,8 Gew.-% und 48,6 Gew.-% und besonders bevorzugt bei 44,2 Gew.-% bezogen auf den Feststoffgehalt des Bindemittels liegt,
- mindestens ein Schäumungsmittel, bestehend aus H₂O₂, sowie einen Katalysator zur Zersetzung des Peroxids, vorzugsweise ein Übergangsmetallsalz, wobei der Gewichtsbereich des H₂O₂ zwischen 0,17 Gew.-% und 0,45 Gew.-%, vorzugsweise zwischen 0,24 Gew.-% und 0,38 Gew.-% und besonders bevorzugt bei 0,31 Gew.-% bezogen auf den Feststoffgehalt des Bindemittels liegt und der Gewichtsbereich des Übergangmetallsalzes zwischen 0,001 Gew.-% und 0,013 Gew.-%, vorzugsweise zwischen 0,004 Gew.-% und 0,010 Gew.-% und besonders bevorzugt bei 0,007 Gew.-% bezogen auf den Feststoffgehalt des Bindemittels liegt,
- mindestens ein Tensid, bestehend aus einer Kombination eines anionischen Tensids mit einem nicht-ionischen Tensid, wobei der Gewichtsbereich der Tenside zwischen 2,35 Gew.-% und 3,55 Gew.-%, vorzugsweise zwischen 2,65 Gew.-% und 3,25 Gew.-%, besonders bevorzugt bei 2,95 Gew.-% bezogen auf den Feststoffgehalt des Bindemittels liegt und das Gewichtsverhältnis des anionischen Tensids zu dem nicht-ioinischen Tensid in einem Bereich zwischen 1,5:1 und 5:1, vorzugsweise zwischen 2:1 und 4,5:1 und am meisten bevorzugt bei 3,9:1 liegt und
- optional einen nicht reaktiven Füllstoff,

wobei das Mengenverhältnis der mindestens einen festen steinbildenden Phase zur mindestens einen alkalischen Phase bezogen auf Feststoffgehalt im Bereich zwischen 30:70 und 70:30, vorzugsweise zwischen 40:60 und 60:40 und besonders bevorzugt bei 54,4:45,6 liegt und
wobei das Gewichtsverhältnis von Al₂O₃ zum SiO₂ in dem beidseitig auf das Fasergeflecht aufgetragene, zumindest teilweise geschäumte im Wesentlichen anorganische Bindemittel, umfassend ein Geopolymer, im Bereich zwischen 12% und 35% liegt und
wobei das Gewichtsverhältnis von Al₂O₃ zum Na₂O in einem Bereich von 60% und 130% liegt und
wobei das Gewichtsverhältnis von K₂O zu Al₂O₃ in einem Bereich von 2% und 13% liegt# und
wobei die thermische Polymerisation des im Wesentlichen anorganischen Bindemittels in einem Temperaturbereich zwischen 60 °C und 180° C, vorzugsweise in einem Temperaturbereich zwischen 100°C und 140°C erfolgt.

Das erfindungsgemäße molare Verhältnis zwischen SiO₂ und Al₂O₃ der alkalischen Phase beträgt 3,4.

Das erfindungsgemäße molare Verhältnis zwischen SiO₂ und Al₂O₃ im Geopolymer liegt bei 4,3.

Das erfindungsgemäße gewichtsmäßige Si-Al Verhältnis im Geopolymer liegt zwischen 3,2 und 5,3.

Ein alternativer erfindungsgemäßer besonders bevorzugter Aspekt ist auch ein als Sandwich aufgebauter, flächiger härtbarer Rohling eines Formkörpers umfassend a) eine zentrale Kernschicht mit einer Vielzahl von Hohlkörpern, b) ein zur Kernschicht beidseitiges Fasergeflecht und c) ein beidseitig auf das Fasergeflecht aufgetragenes, schäumbares im Wesentlichen anorganisches Bindemittel, umfassend ein Geopolymer, der die oben angegebenen Ausgestaltungsformen aufweist.

Erfindungsgemäß ist ein als Sandwich aufgebauter, flächiger härtbarer Rohling eines Formkörpers umfassend oder bestehend aus a) eine zentrale Kernschicht mit einer Vielzahl von Hohlkörpern, b) ein zur Kernschicht beidseitiges Fasergeflecht und c) ein beidseitig auf das Fasergeflecht aufgetragenes, schäumbares im Wesentlichen anorganisches Bindemittel, umfassend ein Geopolymer, der die beschriebenen vorteilhaften, vorzugsweisen, erfindungsgemäßen, erfindungsmäßen bevorzugten, besonders bevorzugten, erfindungsgemäß besonders bevorzugten Ausgestaltungsformen aufweist.

Erfindungsgemäß ganz besonders bevorzugt ist ein als Sandwich aufgebauter, flächiger Formkörper zur Verwendung in Innenräumen von Gebäuden oder in Innenräumen von Transportmitteln, der frei ist von synthetischen, organischen Polymeren.

### Herstellverfahren

Die Herstellung der als Sandwich aufgebauten, flächigen Formkörper zur Verwendung in Innenräumen von Gebäuden oder in Innenräumen von Transportmitteln, umfassend a) eine zentrale Kernschicht mit einer Vielzahl von Hohlkörpern, b) ein zur Kernschicht beidseitiges Fasergeflecht und c) ein beidseitig auf das Fasergeflecht aufgetragenes, zumindest teilweise geschäumtes im Wesentlichen anorganisches Bindemittel, umfassend ein Geopolymer wird am Beispiel der Herstellung eines Ladebodens im Folgenden beschrieben:

### Herstellung der Ansatzmischung A (40 kg)

25.420 g des alkalischen Aktivators mit den oben angegebenen Kennwerten werden in einem Doppelmantel-Mischbehälter eines Grieser Butterflymischers bei angeschlossener Kühlung (Kühlwassertemperatur 13°C) vorgelegt. 10.328 g Metakaolin und 2.384 g Aluminiumoxid werden in ein Transportgefäß eingewogen und bei 500 rpm des Mischers über einen Einfülltrichter portionsweise zugegeben. Nach vollständiger Zugabe wird 2 min bei 1000 rpm zur Dispergierung der Feststoffe homogenisiert. Zu der homogenen Mischung werden 80 g 0,1 N Silbernitratlösung und anschließend eine Mischung aus 160 g eines nicht-ionischen Tensids und 636 g eines anionischen Tensids bei 500 rpm zudosiert. Vor der Zugabe der Wasserstoffperoxidlösung wird die Temperatur kontrolliert. Bei T < 20°C wird 1 kg 6%ige Wassserstoffperoxidlösung bei 250 rpm zugegeben und anschließend 2 min weiter homogenisiert.

Die nun fertige Mischung wird an eine Auspressvorrichtung gebracht (Grieser, Typ RB) und zum Auspressen vorbereitet. Über ein Rohrsystem gelangt die Mischung, gesteuert über ein Magnetventil, zu einer Zweistoff Ausbringdüse. Die Dosiergeschwindigkeit wird durch den Pressdruck (Materialdruck 8 bar) und das Magnetventil auf 400 g/min eingestellt.

### Herstellung der Ansatzmischung B (40kg)

27.032 g des alkalischen Aktivators mit den oben angegebenen Kennwerten werden in einem Doppelmantel-Mischbehälter eines Grieser Butterflymischers bei angeschlossener Kühlung (Kühlwassertemperatur 13°C) vorgelegt. 10.984 g Metakaolin werden in ein Transportgefäß eingewogen und bei 500 rpm des Mischers über einen Einfülltrichter portionsweise zugegeben. Nach vollständiger Zugabe wird 2 min bei 1000 rpm zur Dispergierung des Feststoffes homogenisiert. Zu der homogenen Mischung werden 84 g 0,1 N Silbernitratlösung und anschließend eine Mischung aus 168 g eines nicht-ionischen Tensids und 676 g eines anionischen Tensids bei 500 rpm zudosiert. Vor der Zugabe der Wasserstoffperoxidlösung wird die Temperatur kontrolliert. Bei T < 20°C wird 1.056 g 6%ige Wassserstoffperoxidlösung bei 250 rpm zugegeben und anschließend 2 min weiter homogenisiert.

Die nun fertige Mischung wird an eine Auspressvorrichtung gebracht (Grieser, Typ RB) und zum Auspressen vorbereitet. Über ein Rohrsystem gelangt die Mischung, gesteuert über ein Magnetventil, zu einer Zweistoff Ausbringdüse. Die Dosiergeschwindigkeit wird durch den Pressdruck (Materialdruck 8 bar) und das Magnetventil auf 400 g/min eingestellt.

### Herstellung von recyceltem Material

Eine mit Ansatzmischung B hergestellte Sandwichplatte (80 cm x 80 cm x 2 cm) wird 5 Tage an der Luft getrocknet. Mit Hilfe einer Handsäge wird die Platte in 5 cm breite Streifen geschnitten. Die Streifen werden in einer Schneidmühle (Retsch, SM300) bei einer Drehzahl von 1500 U/min zerkleinert. Dabei fällt ein noch inhomogenes Pulver-Fasergemisch an. Das so vorbehandelte Gemisch wird in einer Planten-Kugelmühle (Retsch PM 100) zu einer Endfeinheit gemahlen, bei der die Teilchen einen D99-Wert von < 3 µm aufweisen. Auf diese Weise werden 100 g gemahlenes Material gesammelt.

Die Teilchenanalyse erfolgt mittels Laserdiffraktometrie mit dem Partikelgrößenmeßgerät LAS 13320 XR von Beckmann Coulter.

### Herstellung der Ansatzmischung C (1 kg Laboransatz)

675,8 g des alkalischen Aktivators mit den oben angegebenen Kennwerten werden zusammen mit 219,6 g Metakaolin und 55 g von dem recycelten Material in einem Mischbecher eingewogen und bei 1000 rpm für 45 s in einem rührwerklosen Labormischer (Hauschild, DAC 1100) homogenisiert. Zu der homogenen Mischung werden 1,5 g 0,1 N Silbernitratlösung (die Menge kann, auf Grund der schon im recycelten Material vorhandenen Silberionen, reduziert werden) und anschließend eine Mischung aus 4,2 g eines nicht-ionischen Tensids und 16,9 g eines anionischen Tensids gegeben und kurz mit 800 rpm für 25 s homogenisiert. Vor der Zugabe der Wasserstoffperoxidlösung wird die Temperatur kontrolliert. Bei T< 20°C werden 27 g 6%ige Wassserstoffperoxidlösung zugegeben und bei 800 rpm für 15 s homogenisiert.

Auf Grund der geringen Ansatzmenge wird die Mischung mit einem handelsüblichen Farbsprühgerät (Wagner) aufgetragen. Die Mischung konnte ohne Verstopfungen auf den Sandwichverbund gesprüht werden. Die so hergestellten Rohlinge wurden unter den gleichen Bedingungen wie die Ansatzmischungen A und B in ein vorgeheiztes Presswerkzeug, das in einer hydraulischen Presse befestigt ist, eingebaut und bei 130°C für 3 Minuten polymerisiert (siehe unten)

| Rezeptur auf 1 kg Bindemittel in g | | | | |
|---|---|---|---|---|
| Position | Bezeichnung | Bemerkung | Zusammensetzung A | Zusammensetzung B |
| 1 | Alkalischer Aktivator | 34,1%ig | 635,5 | 675,8 |
| 2 | Metakaolin | | 258,2 | 274,6 |
| 3 | scharf calziniertes Al₂O₃ | | 59,6 | - |
| 4 | Nicht-ioinisches Tensid Kokosfettsäurediethanolamid | 85%ig | 4,0 | 4,2 |
| 5 | Anionisches Tensid Sulfosuccinat | 70%ig | 15,9 | 16,9 |
| 6 | AgNO₃ | 0,1N | 2,0 | 2,1 |
| 7 | Wasserstoffperoxid | 6%ig | 24,8 | 26,4 |

| Rezeptur auf 1 kg Bindemittel in g | | | |
|---|---|---|---|
| Position | Bezeichnung | Bemerkung | Zusammensetzung C |
| 1 | Alkalischer Aktivator | 34,1%ig | 675,8 |
| 2 | Metakaolin | | 219,6 |
| 3 | recyceltes Material | | 55 |
| 4 | Nicht-ionisches Tensid Kokosfettsäurediethanolamid | 85%ig | 4,2 |
| 5 | Anionisches Tensid Sulfosuccinat | 70%ig | 16,9 |
| 6 | AgNO₃ | 0,1N | 1,5 |
| 7 | Wasserstoffperoxid | 6%ig | 27 |

### Vorbereitung des Sandwichverbundes

Ein 20 mm Wabenkernzuschnitt aus Papier mit den oben angegebenen Kenndaten wird beidseitig mit Glasfasermatten mit den oben angegebenen Kenndaten belegt und die Matten werden auf den Wabenzuschnitt befestigt. Das Flächengewicht des Glasfasergewebes betrug 450 g/m². Die Befestigung kann beispielsweise durch Verkleben erfolgen, vorzugsweise wird sie mechanisch, beispielsweise unter Verwendung von Tackerklammern vorgenommen.

### Auftrag der Mischung

Der Auftrag der Bindemittelmischung kann - wie oben angegeben - industriell grundsätzlich nach unterschiedlichen Verfahren erfolgen. Erfindungsgemäß bevorzugt ist das Sprühverfahren.

Hierbei wird entweder der Sandwichverbund in einem Schacht fest eingespannt und mit einer mobilen Düsenanordnung beidseitig besprüht oder eine fest installierte Düsenanordnung besprüht den beweglichen Sandwichverbund. In beiden Fällen gewährleisten die jeweiligen gleichmäßigen Bewegungsabläufe der mobilen Einheiten eine vollständige Imprägnierung des Verbundformkörpers.

Die Sprühkopf befindet sich jeweils in einem Abstand von 30 cm vom Verbundformkörper. Der Auftrag beträgt 400 g/m². Der Abstand kann zwischen 20 bis 30 cm betragen, der Auftrag kann zwischen 300 und 400 g/m² betragen.

### Thermische Polymerisation im Presswerkzeug

Die mit dem Bindemittel besprühten als Sandwich aufgebauten, flächigen Formkörper, die sogenannten Rohlinge, werden sofort nach der Imprägnierung mit dem Bindemittel in ein Presswerkzeug aus Stahl, das in eine hydraulische Presse montiert ist, eingelegt. Die Presse verfügt über eine Schließkraft von 250 t. Die Pressform hat wenige offene Stellen, damit das vorhandene und das bei der Polykondensation freigesetzte Wasser entweichen kann. Die Pressform ist auf 130°C vorgeheizt. Der Forminnendruck liegt in einem Bereich von 1,1 und 10 bar, vorzugsweise in einem Bereich von 1,1 und 4 bar und besonders bevorzugt in einem Bereich von 1,2 und 3 bar. Im Versuch wird ein Forminnendruck von 2,5 bar eingestellt. Die Zuhaltezeit beträgt 3 Minuten. Nachdem sich die Pressform geöffnet hat, wird der gehärtete Formkörper entnommen und zur Nachtrocknung des Formkörpers bei Raumtemperatur für 5 Tage belassen oder mit einem Durchlauftrockner bei 90°C in 30 Minuten getrocknet.

Die so erhaltenen Formkörper sind hervorragend als Kofferraumladeböden in Automobilen zu verwenden.

Die mechanischen Eigenschaften der Kofferraumladeböden mit dem Bindemittel auf Basis des Geopolymers (Zusammensetzung B) wurden gemäß dem 3-Punkt Biegeversuch nach ISO 178 ermittelt und mit den entsprechenden Werten der Kofferraumladeböden verglichen, die mit dem Bindemittel auf Basis von Polyurethan gefertigt wurden. Die Größe der Probekörper betrug 100 mm x 356 mm x 20 mm.

| 3-Punkt Biegeversuch nach ISO 178 | | | |
|---|---|---|---|
| Bezeichnung | Max. Kraft | Max. Weg | Spannung bei max. Kraft |
| | [N] | [mm] | [MPa] |
| PUR | 1453±87 | 5,63±0,55 | 8,72±0,82 |
| A | 1302±104 | 3,91±0,74 | 7,25±1,33 |
| B | 1423±91 | 5,41±0,73 | 8,13±1,25 |

Die Ergebnisse sind Mittelwerte aus jeweils 3 Messungen.

Die Daten belegen, dass die erfindungsgemäßen flächigen Formkörper auf der Basis von Geopolymeren an die herausragenden Werte der PUR-Formkörper heranreichen. Dies ist ein außergewöhnliches Ergebnis, da die PUR Formkörper unter allen verfügbaren Werkstoffen der Goldstandard für Ladeböden oder Hutablagen sind und mit ihren Werten teilweise weit oberhalb der Anforderungsprofile der Automobilhersteller liegen. Das oben formulierte erfindungsgemäße Ziel ist somit erreicht.

Ein weiterer erfindungsgemäßer besonders bevorzugter Aspekt ist somit ein als Sandwich aufgebauter, flächige Formkörper insbesondere zur Verwendung als Hutablage, als Kofferraumladeboden, als Autotürverkleidungsträger oder als Autohimmel, wobei die mechanischen Eigenschaften der Formkörper in einem 3-Punkt Biegeversuch nach ISO 178 mit Probekörpern in den Dimensionen 100 mm x 356 mm x 20 mm eine maximale Kraft von 1298 N bis 1506 N, einen maximalen Weg von 4,17 mm bis 5,65 mm und ein Spannung bei maximaler Kraft von 6,72 MPa bis 9,38 MPa aufweisen.

Die Geopolymerzusammensetzung A enthält scharf calciniertes Aluminiumoxid, das in Sinne der vorliegenden Erfindung ein nicht-reaktiver Füllstoff ist, da sein Al₂O₃ nicht für eine Umsetzung zur Verfügung steht. Er wurde verwendet, um ein rheologisch thixotropes Verhalten der flüssigen, wässerigen Bindemittelzusammensetzung beim Besprühen des Bindemittels durch die Düse auf dem Formkörper zu erzeugen. Das Bindemittel soll nicht an der Deckschicht herunterlaufen, sondern dort verbleiben. Die Qualität der hergestellten Formkörper erreichte zwar nicht ganz die Werte des Goldstandards, befindet sich aber dennoch auf einem vergleichbaren Niveau mit dem der Geopolymerzusammensetzung B. Die Formkörper würden die entsprechenden Prüfungen bei den verschiedenen Automobilherstellern ebenfalls erfüllen.

Auch die Formkörper, die recyceltes Material enthielten, fielen bei subjektiver Begutachtung in ihrer Qualität nicht von den mechanisch untersuchten Typen der Zusammensetzungen A und B ab.

### Brandversuche

Da die Brandtests der verschiedenen Automobilhersteller sehr unterschiedliche Haustests sind und keine harmonisierten Brandtests existieren, benutzen die Automobilzulieferer Tests, die möglich viele Aspekte der Unterschiede aufnehmen, um die einzelnen Prüfungen bei verschiedenen Automobilherstellern später dann alle erfolgreich ablegen zu können.

### Hier wurde folgendermaßen getestet:

Der Brandtest wurde in Anlehnung an die DIN EN 60695-11-10 durchgeführt. Als Flammquelle dient ein Bunsenbrenner, der mit einer sogenannten "Vormischflamme" brennt. Das Ventil des Brenners ist dabei voll geöffnet. Man spricht dann von einer "rauschenden Flamme", weil es zu einer deutlichen Zunahme der Geräuschentwicklung kommt. Es zischt dabei sehr laut, da durch das offene Ventil der Flamme Sauerstoff der Luft zugemischt wird, vollzieht sich die Verbrennung vollständiger und kann sehr viel heißer ablaufen. Der Bunsenbrenner wurde mit Propangas betrieben. Die Versuche wurden gefilmt und die Temperaturentwicklung auf den Platten wurde aufgezeichnet. Die Flammtemperatur auf den Platten lag zwischen 960°C und 1050°C. Der Flammabstand zu den Platten, die vertikal beflammt wurden, betrug 60 mm. Die Beflammungsdauer betrug 5 Minuten.

Sowohl die Polyurethanformkörper als auch die Geopolymerformkörper brennen nicht. Im Aufschlagbereich der Flamme kommen die Glasfasern der Deckschichten zum Glühen. Bei den Polyurethanformkörpern kommt es zu einer deutlich starken, heftigen dunklen Rauchentwicklung durch die thermische Zersetzung der Bindemittelmatrix. Die intensiven Emissionen sind geruchsstark und entwickeln einen unerträglichen Gestank. Die Bindemittelmatrix ist vollständig abgebaut.

Bei den erfindungsgemäßen Formkörpern bildet sich ein wenig heller Rauch, eine sehr geringe Emission, völlig geruchsneutral, vermutlich verdampfende Restfeuchte, also Wasserdampf, aus dem Formkörper. Unsere Untersuchungen ergaben, dass die anorganische Matrix vollständig erhalten geblieben ist.

Ein zusätzlicher erfindungsgemäßer besonders bevorzugter Aspekt ist somit ein als Sandwich aufgebauter, flächige Formkörper insbesondere zur Verwendung als Hutablage, als Kofferraumladeboden, als Autotürverkleidungsträger oder als Autohimmel, der in einem Brandtest in Anlehnung an Din EN 60695-11-10 bei rauschender Flamme und einer Flammtemperatur zwischen 960 °C und 1050 °C bei vertikaler Beflammung und einem Flammabstand von 60 mm bei einer Beflammungsdauer von 5 Minuten wenig geruchsneutralen hellen Rauch emittiert und wobei die anorganische Bindemittelmatrix der Formkörper vollständig erhalten bleibt.

Ein erfindungsgemäßes Verfahren zur Herstellung eines erfindungsgemäßen als Sandwich aufgebauten, flächigen Formkörpers zur Verwendung in Innenräumen von Gebäuden oder in Innenräumen von Transportmitteln, umfassend a) eine zentrale Kernschicht mit einer Vielzahl von Hohlkörpern, b) ein zur Kernschicht beidseitiges Fasergeflecht und c) ein beidseitig auf das Fasergeflecht aufgetragenes, zumindest teilweise geschäumtes im Wesentlichen anorganisches Bindemittel, umfassend ein Geopolymer wird mit den folgenden Schritten ausgeführt:
- Bereitstellen einer zentralen Kernschicht a),
- Beidseitiges Aufbringen eines Fasergeflechtes b) auf die zentrale Kernschicht a),
- Imprägnieren des beidseitigen Fasergeflechtes b) auf der zentralen Kernschicht a) mit einem im Wesentlichen anorganischen Bindemittel, das umfasst
   1.) mindestens eine feste steinbildende Phase, die aus Metakaolin besteht ,
   2.) mindestens eine wässrige, alkalische Phase, die ausgewählt ist aus der Gruppe bestehend aus Alkalisalzen, Alkalisilikaten, Alkalialuminaten und Alkalihydroxiden sowie optional aus Hydroxiden, Carbonaten, Oxiden von Erdalkalien, Eisen, Titan, Silizium und Aluminium und Aluminaten,
   3.) mindestens ein Schäumungsmittel, das ausgewählt ist aus der Gruppe bestehend aus Peroxidverbindungen, sowie einem Katalysator zur Zersetzung des Peroxids,
   4.) mindestens ein Tensid, das ausgewählt ist aus der Gruppe bestehend aus anionischen, nicht-ionischen und amphoteren Tensiden und
   5.) optional einen nicht reaktiven Füllstoff,

wobei das Mengenverhältnis der mindestens einen festen steinbildenden Phase zur mindestens einen alkalischen Phase bezogen auf den Feststoffgehalt im Bereich zwischen 30:70 und 70:30, vorzugsweise zwischen 40:60 und 60:40 und besonders bevorzugt bei 54,4:45,6 liegt und
wobei der Auftrag des im Wesentlichen anorganischen Bindemittels zwischen 100 g/m² und 900 g/m² liegt und
wobei die thermische Polymerisation des im Wesentlichen anorganischen Bindemittels in einem Temperaturbereich zwischen 60 °C und 180° C, vorzugsweise in einem Temperaturbereich zwischen 100°C und 140°C und in innerhalb eines Zeitintervalls von 1 bis 8 Minuten in einer nicht vollständig geschlossenen Metallform eines Presswerkzeugs erfolgt,
   - Entnahme des Formkörpers aus dem Presswerkzeug,
   - Nachtrocknung des Formkörpers durch Belassen bei Raumtemperatur für 5 Tage oder mit einem Durchlauftrockner bei 90°C über 30 Minuten.

Wie aus einer Vielzahl eigener Versuche hervorgeht, ist erfindungsgemäß besonders bevorzugt ein Verfahren zur Herstellung eines erfindungsgemäßen als Sandwich aufgebauten, flächigen Formkörpers zur Verwendung in Innenräumen von Gebäuden oder in Innenräumen von Transportmitteln, umfassend a) eine zentrale Kernschicht mit einer Vielzahl von Hohlkörpern, b) ein zur Kernschicht beidseitiges Fasergeflecht und c) ein beidseitig auf das Fasergeflecht aufgetragenes, zumindest teilweise geschäumtes im Wesentlichen anorganisches Bindemittel, umfassend ein Geopolymer mit den folgenden Schritten:
- Bereitstellen einer zentralen Kernschicht a) aus Papier, Karton oder Pappe,
- Beidseitiges Aufbringen eines Glasfasergeflechtes b) auf die zentrale Kernschicht a),
- Bedüsen des beidseitigen Glasfasergeflechtes b) auf der zentralen Kernschicht a) aus Papier, Karton oder Pappe mit einem im Wesentlichen anorganisches Bindemittel, das umfasst
   1.) mindestens eine feste steinbildende Phase, bestehend aus Metakaolin, wobei die Menge an Metakaolin in einem Gewichtsbereich zwischen 42,0 Gew.-% und 63,2 Gew.-%, vorzugsweise zwischen 47,3 Gew.-% und 57,9 Gew.-% und besonders bevorzugt bei 52,6 Gew.-% bezogen auf den Feststoffgehalt des Bindemittels liegt,
   2.) mindestens eine wässrige, alkalische Phase, umfassend Alkalisilikate, wobei das Gewichtsverhältnis SiO₂ zu Alkalioxid pro Liter Lösung zwischen 2,5 und 3,9, vorzugsweise zwischen 2,9 und 3,5 liegt und der pH-Wert einer 1:100 verdünnten Lösung der mindestens einen wässrigen, alkalischen Phase gemäß DIN 38404-5:20098-07 zwischen 10 und 11 liegt und die elektrische Leitfähigkeit einer 1:100 verdünnten Lösung der mindestens einen wässrigen alkalischen Phase gemäß DIN EN 27888:19983-11 zwischen 2000 µS/cm und 3000 µS/cm liegt und wobei die Menge der alkalischen Phase in einem Gewichtsbereich zwischen 35,4 Gew.-% und 53,0 Gew.-%, vorzugsweise zwischen 39,8 Gew.-% und 48,6 Gew.-% und besonders bevorzugt bei 44,2 Gew.-% bezogen auf den Feststoffgehalt des Bindemittels liegt,
   3.) mindestens ein Schäumungsmittel, bestehend aus H₂O₂, sowie einen Katalysator zur Zersetzung des Peroxids, vorzugsweise ein Übergangsmetallsalz, wobei die der Gewichtsbereich des H₂O₂ zwischen 0,17 Gew.-% und 0,45 Gew.-%, vorzugsweise zwischen 0,24 Gew.-% und 0,38 Gew.-% und besonders bevorzugt bei 0,31 Gew.-% bezogen auf den Feststoffgehalt des Bindemittels liegt und der Gewichtsbereich des Übergangmetallsalzes zwischen 0,001 Gew.-% und 0,013 Gew.-%, vorzugsweise zwischen 0,004 Gew.-% und 0,010 Gew.-% und besonders bevorzugt bei 0,007 Gew.-% bezogen auf den Feststoffgehalt des Bindemittels liegt,
   4.) mindestens ein Tensid, bestehend aus einer Kombination eines anionischen Tensids mit einem nicht-ionischen Tensid, wobei der Gewichtsbereich der Tenside zwischen 2,35 Gew.-% und 3,55 Gew.-%, vorzugsweise zwischen 2,65 Gew.-% und 3,25 Gew.-%, besonders bevorzugt bei 2,95 Gew.-% bezogen auf den Feststoffgehalt des Bindemittels liegt und das Gewichtsverhältnis des anionischen Tensids zu dem nicht-ioinischen Tensid in einem Bereich zwischen 1,5:1 und 5:1, vorzugsweise zwischen 2:1 und 4,5:1 und am meisten bevorzugt bei 3,3:1 liegt und
   5.) optional einen nicht reaktiven Füllstoff,

wobei das Mengenverhältnis der mindestens einen festen steinbildenden Phase zur mindestens einen alkalischen Phase bezogen auf den Feststoffgehalt im Bereich zwischen 30:70 und 70:30, vorzugsweise zwischen 40:60 und 60:40 und besonders bevorzugt bei 54,4:45,6 liegt und
wobei das Gewichtsverhältnis von Al₂O₃ zum SiO₂ in dem beidseitig auf das Fasergeflecht aufgetragene, zumindest teilweise geschäumte im Wesentlichen anorganische Bindemittel, umfassend ein Geopolymer im Bereich zwischen 12% und 35% liegt und
wobei das Gewichtsverhältnis von Al₂O₃ zum Na₂O in einem Bereich von 60% und 130% liegt und
wobei das Gewichtsverhältnis von K₂O zu Al₂O₃ in einem Bereich von 2% und 13% liegt und
wobei der Auftrag des im Wesentlichen anorganischen Bindemittels zwischen 100 g/m² und 900 g/m² liegt und
wobei die thermische Polymerisation des im Wesentlichen anorganischen Bindemittels in einem Temperaturbereich zwischen 60 °C und 180° C, vorzugsweise in einem Temperaturbereich zwischen 100°C und 140°C innerhalb eines Zeitintervalls von 1 bis 8 Minuten in einer nicht vollständig geschlossenen Metallform eines Presswerkzeugs erfolgt,
   - Entnahme des Formkörpers aus dem Presswerkzeug,
   - Nachtrocknung des Formkörpers durch Belassen bei Raumtemperatur für 5 Tage oder mit einem Durchlauftrockner bei 90°C über 30 Minuten.

Aufgrund des hervorragenden Eigenschaftsprofil der erfindungsgemäßen als Sandwich aufgebauten, flächigen Formkörper bietet sich eine Verwendung an als Konstruktionselement in der Bauindustrie für Gebäude oder in der Transportindustrie, vorzugsweise zur Verwendung in Innenräumen von Gebäuden oder in Innenräumen von Transportmitteln, besonders bevorzugt zur Verwendung in Automobilen als Hutablage, als Kofferraumladeboden, als Autotürverkleidungsträger oder als Autohimmel. Hierbei wird der Begriff des "Automobils" umfassend verwendet, es umfasst zusätzlich zu den eingangs erwähnten Fahrzeugen auch Busse, Geländefahrzeuge, Personenfahrzeuge mit unterschiedlichen Antrieben, elektrisch betriebene Fahrzeuge, mit Wasserstoff betriebene Fahrzeuge, mit fossilen Brennstoffen betriebene Fahrzeuge, Plug-In-Hybridelektrofahrzeuge sowie mit nachwachsenden Rohstoffen betriebene Fahrzeuge.

Zusammenfassend stellen wir fest, dass die vorliegende Erfindung
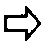 ein extrem einfach aufgebautes reaktives Bindemittelsystem zur Herstellung flächiger Formkörper als Sandwichelemente der Industrie zur Verfügung stellt, das in seiner Anwendung große Toleranzen erlaubt und das in einem Eintopfverfahren problemlos durch Mischen der Komponenten synthetisiert werden kann.
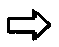 ein komplett stofflich ungefährliches reaktives Bindemittelsystem zur Herstellung flächiger Formkörper als Sandwichelemente der Industrie zur Verfügung stellt, das keine für Menschen und Umwelt gefährlichen Stoffe emittiert und völlig geruchsneutral hergestellt und appliziert werden kann.
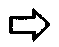 sämtliche einzelne Strukturelemente des erfindungsgemäßen als Sandwich aufgebauten flächigen Formkörpers konzeptionell darauf ausgelegt hat, dass der Werkstoff nicht brennbar ist und grundsätzlich keine giftigen Gase freisetzen kann, da das Geopolymer hitze- und brandfest ist.
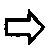 als Sandwich aufgebaute flächige Formkörper der Industrie zur Verfügung stellt, die dem Kriterium der Nachhaltigkeit einer Dekarbonisierung voll und ganz Rechnung tragen, denn weder das Metakaolin, noch die alkalische Aktivatorlösung haben einen reaktionsbedingten CO₂-Ausstoß zur Folge. Unter der (zukünftigen) Voraussetzung einer umfassenden Stromerzeugung aus regenerativen Energien wäre das Ziel einer 0 CO₂- Emission mit einem erfindungsgemäßen als Sandwich aufgebauten flächigen Formkörper erreicht. Natürlich ist auch seine heutige CO₂-Bilanz erheblich geringer im Vergleich zu sämtlichen anderen Formkörpern auf Basis synthetischer organischer Bindemittel.
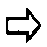 als Sandwich aufgebaute flächige Formkörper der Industrie zur Verfügung stellt, die vollständig wiederverwertet werden können.

Unseres Wissens ist ein erfindungsgemäßer als Sandwich aufgebauter, flächiger Formkörper zur Verwendung in Innenräumen von Gebäuden oder in Innenräumen von Transportmitteln im Stand der Technik unbekannt. Er ist auch nirgendwo nahegelegt. Ein starkes Indiz für einen solchen Befund ist der Umstand, dass seit vielen Jahren sowohl seitens der Automobilindustrie als auch seitens der Automobilzulieferindustrie - bisher vergeblich -versucht wird, flächige Formkörper für den Innenraum von Automobilen zu verwenden, die möglichst klimaneutral, weder für den Menschen noch für die Umwelt bei Herstellung und Verwendung gefährlich, einfach herstellbar und vollständig wiederverwertbar sind. Bisher scheint es nicht gelungen zu sein, entsprechende Formteile, die die hohen mechanischen Eigenschaften der organischen-synthetischen Polymeren auszeichnen, mit ausschließlich anorganischen Polymeren zu erreichen. Die vorliegende Erfindung hat diese Hürde erfolgreich genommen.

Darüberhinaus offenbart die vorliegende Erfindung eine allgemeine Arbeitsanweisung, wie diese überraschende Synergie zwischen dem Geopolymerschaum und dem flächigen Körper mit Sandwichform nicht nur zur Herstellung von Hutablagen oder Kofferraumladeböden, wie in den Ansprüchen 7 und 10 beansprucht, sondern auf alle möglichen flächigen Formkörper zur Verwendung in Innenräumen von Transportmitteln und in Innenräumen von Gebäuden anzuwenden ist, wobei die folgenden Schritte einzuhalten sind:
- Der Formkörperkern sollte in ein möglichst starkes Fasergeflecht fest eingebettet werden, wobei das Fasergeflecht ein möglichst hohes Flächengewicht aufweisen sollte, damit der resultierende gehärtete Formkörper hohe mechanische Werte erbringen kann.
- Hierbei muss ein Kompromiss zwischen dem Flächengewicht des Fasergeflechts und der Menge des in den Kern penetrierenden im Wesentlichen anorganischen Bindemittels erzielt werden, denn je höher das Flächengewicht des Fasergeflechts, umso weniger Bindemittel kann in den Kern penetrieren.
- Der beste Kompromiss ist der, bei dem das Flächengewicht des Fasergeflechts möglichst hoch ist und die Penetration des im Wesentlichen anorganischen Bindemittels in den Kern exakt so eingestellt ist, dass der gesamte Verbund gerade zuverlässig fest haftet.
- Das bedeutet, dass die Menge des in den Kern penetrierenden im Wesentlichen anorganischen Bindemittels möglichst gering sein sollte, damit das Flächengewicht möglichst hoch sein kann.
- Dabei fördert die Schaumbildung die Penetration des im Wesentlichen anorganischen Bindemittels in die Kernschicht.
- Nun kann das Verhältnis der verbliebenen Schaumzellen im Formkörper zur maximal möglichen Menge der Schaumzellen ermittelt werden. Ein Optimum an mechanischer Stabilität wird in einem Bereich von 1,5 % - 5 % der maximal möglichen Schaumzellen erreicht.

Durch einfache Routinearbeiten kann ein Fachmann die jetzt sehr logisch erscheinenden Zusammenhänge nunmehr umsetzen, ohne selbst erfinderisch tätig zu werden.

## Patentansprüche

1. Ein als Sandwich aufgebauter, flächiger Formkörper zur Verwendung in Innenräumen von Gebäuden oder in Innenräumen von Transportmitteln, umfassend
a) eine zentrale Kernschicht mit einer Vielzahl von Hohlkörpern,
b) ein zur Kernschicht beidseitiges Fasergeflecht und
c) ein beidseitig auf das Fasergeflecht aufgetragenes, zumindest teilweise geschäumtes im Wesentlichen anorganisches Bindemittel, umfassend ein Geopolymer,
wobei das Geopolymer aus der thermischen Polymerisation einer härtbaren und schäumbaren Zusammensetzung herstellbar ist, die umfasst
- mindestens eine feste steinbildende Phase, bestehend aus Metakaolin,
- mindestens eine wässrige, alkalische Phase,
- mindestens ein Schäumungsmittel und
- mindestens ein Tensid,
wobei die Mehrzahl der gebildeten Schaumzellen des im Wesentlichen anorganischen Bindemittels, umfassend ein Geopolymer, während der thermischen Härtung in dem begrenzten Expansionsraum einer Pressform wieder größtenteils zerstört wird.

2. Ein als Sandwich aufgebauter, flächiger Formkörper zur Verwendung in Innenräumen von Gebäuden oder in Innenräumen von Transportmitteln nach Anspruch 1, **dadurch gekennzeichnet, dass** die stoffliche Zusammensetzung der zentralen Kernschicht a) ausgewählt ist aus der Gruppe bestehend aus
natürlichen Fasern, umfassend Kenaf, Kapok, Bast, Urena, Gräser, Reis, Schalen, Bagasse, Baumwolle, Jute, Hanf, Flachs, Seide, Bambus, Sisal, Abaka, Holz, Zellulose, Derivaten der Zellulose, Proteinfasern, Polylactid, Alginat, Chitin und dessen Derivaten, Chitosan, Polyisoprenen, biobasierten Polyamiden, Papier, Karton oder Pappe,
dünnen Metallfolien,
anorganischen Fasern, gegebenenfalls beschichtet, umfassend Glasfasern, Steinfasern, Basaltfasern, Keramikfasern und Wollastonit sowie
organisch-synthetischen Fasern, umfassend Kohlenstofffasern, Polyvinylchlorid, Polyvinylidenchlorid, Polyester, Polyethylenterephthalat, Polybutylenterephthalat, Polyamid, Polyimid, Aramid, Polyamidimid, Polyacrylnitril, Polymethylmethacrylat, Polytetrafluorethylen, Polyethylen, Polypropylen, Polyurethan, Polybenzoxazol, Polybenzimidazol, Polyharnstoff, Melamin, Polystyrol, Polyphenylensulfid, Polyvinylalkohol und Polycarbonat,
bevorzugt ausgewählt aus natürlichen oder dünnen Metallfolien, besonders bevorzugt ausgewählt aus Papier, Karton oder Pappe.

3. Ein als Sandwich aufgebauter, flächiger Formkörper zur Verwendung in Innenräumen von Gebäuden oder in Innenräumen von Transportmitteln nach einem der vorangehenden Ansprüche, **dadurch gekennzeichnet, dass** die stofflichen Zusammensetzungen der zur Kernschicht beidseitigen Fasergeflechte b) unabhängig voneinander ausgewählt sind aus der Gruppe bestehend aus
natürlichen Fasern, umfassend Kenaf, Kapok, Bast, Urena, Gräser, Reis, Schalen, Bagasse, Baumwolle, Jute, Hanf, Flachs, Seide, Bambus, Sisal, Abaka, Holz, Zellulose, Derivaten der Zellulose, Proteinfasern, Polylactid, Alginat, Chitin und dessen Derivaten, Chitosan, Polyisoprenen, biobasierten Polyamiden, Papier, Karton oder Pappe,
metallischen Fasern,
anorganischen Fasern, gegebenenfalls beschichtet, umfassend Glasfasern, Steinfasern, Basaltfasern, Keramikfasern und Wollastonit sowie
organisch-synthetischen Fasern, umfassend Kohlenstofffasern, Polyvinylchlorid, Polyvinylidenchlorid, Polyester, Polyethylenterephthalat, Polybutylenterephthalat, Polyamid, Polyimid,
Aramid, Polyamidimid, Polyacrylnitril, Polymethylmethacrylat, Polytetrafluorethylen, Polyethylen, Polypropylen, Polyurethan, Polybenzoxazol, Polybenzimidazol, Polyharnstoff, Melamin, Polystyrol, Polyphenylensulfid, Polyvinylalkohol und Polycarbonat,
bevorzugt ausgewählt aus anorganischen Fasern, besonders bevorzugt ausgewählt aus Glasfasern.

4. Ein als Sandwich aufgebauter, flächiger Formkörper zur Verwendung in Innenräumen von Gebäuden oder in Innenräumen von Transportmitteln nach einem der vorangehenden Ansprüche, **dadurch gekennzeichnet, dass** die Hohlkörper der zentralen Kernschicht a) ausgewählt sind aus beliebigen geometrischen Körpern in Kombination mit eckigen und/oder kegelförmigen und/oder zylindrischen und/oder runden und/oder sphärischen Körpern, wobei die Kombination aus beliebigen geometrischen Körpern mit sechsseitig prismatischen Körpern besonders bevorzugt ist und wobei die Hohlräume der zentralen Kernschicht regelmäßig oder unregelmäßig angeordnet sind, wobei eine regelmäßige Anordnung bevorzugt ist und wobei die zentrale Kernschicht aus einem Stück besteht, in dem die geometrischen Körper einlagig oder mehrlagig angeordnet sind.

5. Ein als Sandwich aufgebauter, flächiger Formkörper zur Verwendung in Innenräumen von Gebäuden oder in Innenräumen von Transportmitteln nach einem der vorangehenden Ansprüche, **dadurch gekennzeichnet, dass** der Formkörper umschlossen ist von weiteren Strukturelementen d), vorzugsweise von Teppich-, Vlies-, Mattenelementen oder Dekorstoffen.

6. Ein als Sandwich aufgebauter, flächiger Formkörper zur Verwendung in Innenräumen von Gebäuden oder in Innenräumen von Transportmitteln nach einem der vorangehenden Ansprüche, **dadurch gekennzeichnet, dass** das Geopolymer des beidseitig auf das Fasergeflecht aufgetragenen, zumindest teilweise geschäumten, anorganischen Bindemittels aus der thermischen Polymerisation einer härtbaren und schäumbaren Zusammensetzung erhältlich ist, die umfasst
- mindestens eine feste steinbildende Phase, bestehend aus Metakaolin
- mindestens eine wässrige, alkalische Phase, die ausgewählt ist aus der Gruppe bestehend aus Alkalisalzen, Alkalisilikaten, Alkalialuminaten und Alkalihydroxiden sowie optional aus Hydroxiden, Carbonaten und Oxiden von Erdalkalien, Eisen, Titan, Silizium und Aluminium und Aluminaten,
- mindestens ein Schäumungsmittel, das ausgewählt ist aus der Gruppe bestehend aus Peroxidverbindungen, sowie einem Katalysator zur Zersetzung des Peroxids,
- mindestens ein Tensid, das ausgewählt ist aus der Gruppe bestehend aus anionischen, nicht-ionischen und amphoteren Tensiden und
- optional einen nicht reaktiven Füllstoff,
wobei das Mengenverhältnis der mindestens einen festen steinbildenden Phase zur mindestens einen alkalischen Phase bezogen auf Feststoffgehalt im Bereich zwischen 30:70 und 70:30, vorzugsweise zwischen 40:60 und 60:40 und besonders bevorzugt bei 54,4:45,6 liegt und
wobei die thermische Polymerisation des im Wesentlichen anorganischen Bindemittels in einem Temperaturbereich zwischen 60 °C und 180° C, vorzugsweise in einem Temperaturbereich zwischen 100°C und 140°C erfolgt.

7. Ein als Sandwich aufgebauter, flächiger Formkörper zur Verwendung in Innenräumen von Gebäuden oder in Innenräumen von Transportmitteln nach einem der vorangehenden Ansprüche, **dadurch gekennzeichnet, dass** das Geopolymer des beidseitig auf das Fasergeflecht aufgetragenen, zumindest teilweise geschäumten, anorganischen Bindemittels aus der thermischen Polymerisation einer härtbaren und schäumbaren Zusammensetzung erhältlich ist, die umfasst
- mindestens eine feste steinbildende Phase, bestehend aus Metakaolin, wobei die Menge an Metakaolin in einem Gewichtsbereich zwischen 42,0 Gew.-% und 63,2 Gew.-%, vorzugsweise zwischen 47,3 Gew.-% und 57,9 Gew.-%, besonders bevorzugt bei 52,6 Gew.-% bezogen auf den Feststoffgehalt des Bindemittels liegt,
- mindestens eine wässrige, alkalische Phase, umfassend Alkalisilikate, wobei das Gewichtsverhältnis SiO₂ zu Alkalioxid pro Liter Lösung zwischen 2,5 und 3,9, vorzugsweise zwischen 2,9 und 3,5 liegt und der pH-Wert einer 1:100 verdünnten Lösung der mindestens einen wässrigen, alkalischen Phase gemäß DIN 38404-5:20098-07 zwischen 10 und 11 liegt und die elektrische Leitfähigkeit einer 1:100 verdünnten Lösung der mindestens einen wässrigen alkalischen Phase gemäß DIN EN 27888:19983-11 zwischen 2000 µS/cm und 3000 µS/cm liegt und wobei die Menge der alkalischen Phase in einem Gewichtsbereich zwischen 35,4 Gew.-% und 53,0 Gew.-%, vorzugsweise zwischen 39,8 Gew.-% und 48,6 Gew.-%, besonders bevorzugt bei 44,2 Gew.-% bezogen auf den Feststoffgehalt des Bindemittels liegt,
- mindestens ein Schäumungsmittel, bestehend aus H₂O₂, sowie einem Katalysator zur Zersetzung des Peroxids, vorzugsweise ein Übergangsmetallsalz, wobei der Gewichtsbereich des H₂O₂ zwischen 0,17 Gew.-% und 0,45 Gew.-%, vorzugsweise zwischen 0,24 Gew.-% und 0,38 Gew.-%, besonders bevorzugt bei 0,31 Gew.-% bezogen auf den Feststoffgehalt des Bindemittels liegt und der Gewichtsbereich des Übergangmetallsalzes zwischen 0,001 Gew.-% und 0,013 Gew.-%, vorzugsweise zwischen 0,004 Gew.-% und 0,010 Gew.-%, besonders bevorzugt bei 0,007 Gew.-% bezogen auf den Feststoffgehalt des Bindemittels liegt,
- mindestens ein Tensid, bestehend aus einer Kombination eines anionischen Tensids mit einem nicht-ionischen Tensid, wobei der Gewichtsbereich der Tenside zwischen 2,35 Gew.-% und 3,55 Gew.-%, vorzugsweise zwischen 2,65 Gew.-% und 3,25 Gew.-%, besonders bevorzugt bei 2,95 Gew.-% bezogen auf den Feststoffgehalt des Bindemittels liegt und das Gewichtsverhältnis des anionischen Tensids zu dem nicht-ioinischen Tensid in einem Bereich zwischen 1,5:1 und 5:1, vorzugsweise zwischen 2:1 und 4,5:1 und am meisten bevorzugt bei 3,9:1 liegt und
- optional einen nicht reaktiven Füllstoff,
wobei das Mengenverhältnis der mindestens einen festen steinbildenden Phase zur mindestens einen alkalischen Phase bezogen auf Feststoffgehalt im Bereich zwischen 30:70 und 70:30, vorzugsweise zwischen 40:60 und 60:40 und besonders bevorzugt bei 54,4:45,6 liegt und
wobei das Gewichtsverhältnis von Al₂O₃ zum SiO₂ in dem beidseitig auf das Fasergeflecht aufgetragene, zumindest teilweise geschäumte im Wesentlichen anorganische Bindemittel, umfassend ein Geopolymer im Bereich zwischen 12% und 35% liegt und
wobei das Gewichtsverhältnis von Al₂O₃ zum Na₂O in einem Bereich von 60% und 130% liegt und
wobei das Gewichtsverhältnis von K₂O zu Al₂O₃ in einem Bereich von 2% und 13% liegt und
wobei die thermische Polymerisantion des im Wesentlichen anorganischen Bindemittels in einem Temperaturbereich zwischen 60 °C und 180° C, vorzugsweise in einem Temperaturbereich zwischen 100°C und 140°C stattfindet.

8. Ein als Sandwich aufgebauter, flächiger Formkörper zur Verwendung in Innenräumen von Gebäuden oder in Innenräumen von Transportmitteln nach einem der vorangehenden Ansprüche, **dadurch gekennzeichnet, dass** der Formkörper frei ist von synthetischen, organischen Polymeren.

9. Verfahren zur Herstellung eines als Sandwich aufgebauten, flächigen Formkörpers zur Verwendung in Innenräumen von Gebäuden oder in Innenräumen von Transportmitteln nach einem der vorangehenden Ansprüche mit den folgenden Schritten:
- Bereitstellen einer zentralen Kernschicht a),
- Beidseitiges Aufbringen eines Fasergeflechtes b) auf die zentrale Kernschicht a),
- Imprägnieren des beidseitigen Fasergeflechtes b) auf der zentralen Kernschicht a) mit einem im Wesentlichen anorganischen Bindemittel, das umfasst
1. mindestens eine feste steinbildende Phase, bestehend aus Metakaolin,
2. mindestens eine wässrige, alkalische Phase, die ausgewählt ist aus der Gruppe bestehend aus Alkalisalzen, Alkalisilikaten, Alkalialuminaten und Alkalihydroxiden sowie optional aus Hydroxiden, Carbonaten und Oxiden von Erdalkalien, Eisen, Titan, Silizium und Aluminium und Aluminaten,
3. mindestens ein Schäumungsmittel, das ausgewählt ist aus der Gruppe bestehend aus Peroxidverbindungen, sowie einem Katalysator zur Zersetzung des Peroxids,
4. mindestens ein Tensid, das ausgewählt ist aus der Gruppe bestehend aus anionischen, nicht-ionischen und amphoteren Tensiden und
5. optional einen nicht reaktiven Füllstoff,
wobei das Mengenverhältnis der mindestens einen festen steinbildenden Phase zur mindestens einen alkalischen Phase bezogen auf den Feststoffgehalt im Bereich zwischen 30:70 und 70:30, vorzugsweise zwischen 40:60 und 60:40 und besonders bevorzugt bei 54,4:45,6 liegt und
wobei der Auftrag des anorganischen Bindemittels zwischen 100 g/m² und 900 g/m² liegt und
wobei die thermische Polymerisation des im Wesentlichen anorganischen Bindemittels in einem Temperaturbereich zwischen 60 °C und 180° C, vorzugsweise in einem Temperaturbereich zwischen 100°C und 140°C innerhalb eines Zeitintervalls von 2 bis 8 Minuten in einer nicht vollständig geschlossenen Metallform eines Presswerkzeugs erfolgt,
- Entnahme des Formkörpers aus dem Presswerkzeug,
- Nachtrocknung des Formkörpers durch Belassen bei Raumtemperatur für 5 Tage oder mit einem Durchlauftrockner bei 90°C über 30 Minuten.

10. Verfahren zur Herstellung eines als Sandwich aufgebauten, flächigen Formkörpers zur Verwendung in Innenräumen von Gebäuden oder in Innenräumen von Transportmitteln nach Anspruch 9, mit den folgenden Schritten:
- Bereitstellen einer zentralen Kernschicht a) aus Papier, Karton oder Pappe,
- Beidseitiges Aufbringen eines Glasfasergeflechtes b) auf die zentrale Kernschicht a) aus Papier, Karton oder Pappe,
- Bedüsen des beidseitigen Glasfasergeflechtes b) auf der zentralen Kernschicht a) aus Papier, Karton oder Pappe mit einem im Wesentlichen anorganisches Bindemittel, das umfasst
1. mindestens eine feste steinbildende Phase, bestehend aus Metakaolin, wobei die Menge an Metakaolin in einem Gewichtsbereich zwischen 42,0 Gew.-% und 63,2 Gew.-%, vorzugsweise zwischen 47,3 Gew.-% und 57,9 Gew.-%, besonders bevorzugt bei 52,6 Gew.-% bezogen auf den Feststoffgehalt des Bindemittels liegt,
2. mindestens eine wässrige, alkalische Phase, umfassend Alkalisilikate, wobei das Gewichtsverhältnis SiO₂ zu Alkalioxid pro Liter Lösung zwischen 2,5 und 3,9, vorzugsweise zwischen 2,9 und 3,5 liegt und der pH-Wert einer 1:100 verdünnten Lösung der mindestens einen wässrigen, alkalischen Phase gemäß DIN 38404-5:20098-07 zwischen 10 und 11 liegt und die elektrische Leitfähigkeit einer 1:100 verdünnten Lösung der mindestens einen wässrigen alkalischen Phase gemäß DIN EN 27888:19983-11 zwischen 2000 µS/cm und 3000 µS/cm liegt und wobei die Menge der alkalischen Phase in einem Gewichtsbereich zwischen 35,4 Gew.-% und 53,0 Gew.-%, vorzugsweise zwischen 39,8 Gew.-% und 48,6 Gew.-%, besonders bevorzugt bei 44,2 Gew.-% bezogen auf den Feststoffgehalt des Bindemittels liegt,
3. mindestens ein Schäumungsmittel, bestehend aus H₂O₂, sowie einen Katalysator zur Zersetzung des Peroxids, vorzugsweise ein Übergangsmetallsalz, wobei der Gewichtsbereich des H₂O₂ zwischen 0,17 Gew.-% und 0,45 Gew.-%, vorzugsweise zwischen 0,24 Gew.-% und 0,38 Gew.-%, besonders bevorzugt bei 0,31 Gew.-% bezogen auf den Feststoffgehalt des Bindemittels liegt und der Gewichtsbereich des Übergangsmetallsalzes zwischen 0,001 Gew.-% und 0,013 Gew.-%, vorzugsweise zwischen 0,004 Gew.-% und 0,010 Gew.-%, besonders bevorzugt bei 0,007 Gew.-% bezogen auf den Feststoffgehalt des Bindemittels liegt,
4. mindestens ein Tensid, bestehend aus einer Kombination eines anionischen Tensids mit einem nicht-ionischen Tensid, wobei der Gewichtsbereich der Tenside zwischen 2,35 Gew.-% und 3,55 Gew.-%, vorzugsweise zwischen 2,65 Gew.-% und 3,25 Gew.-%, besonders bevorzugt bei 2,95 Gew.-% bezogen auf den Feststoffgehalt des Bindemittels liegt und das Gewichtsverhältnis des anionischen Tensids zu dem nicht-ioinischen Tensid in einem Bereich zwischen 1,5:1 und 5:1, vorzugsweise zwischen 2:1 und 4,5:1 und am meisten bevorzugt bei 3,9:1 liegt und
5. optional einen nicht reaktiven Füllstoff,
wobei das Mengenverhältnis der mindestens einen festen steinbildenden Phase zur mindestens einen alkalischen Phase bezogen auf den Feststoffgehalt im Bereich zwischen 30:70 und 70:30, vorzugsweise zwischen 40:60 und 60:40 und besonders bevorzugt bei 54,4:45,6 liegt und
wobei das Gewichtsverhältnis von Al₂O₃ zum SiO₂ in dem beidseitig auf das Fasergeflecht aufgetragene, zumindest teilweise geschäumte im Wesentlichen anorganische Bindemittel, umfassend ein Geopolymer im Bereich zwischen 12% und 35% liegt und
wobei das Gewichtsverhältnis von Al₂O₃ zum Na₂O in einem Bereich von 60% und 130% liegt und
wobei das Gewichtsverhältnis von K₂O zu Al₂O₃ in einem Bereich von 2% und 13% liegt und
wobei der Auftrag des anorganischen Bindemittels zwischen 100 g/m² und 900 g/m² liegt und
wobei die thermische Polymerisation des im Wesentlichen anorganischen Bindemittels in einem Temperaturbereich zwischen 60 °C und 180° C, vorzugsweise in einem Temperaturbereich zwischen 100°C und 140°C innerhalb eines Zeitintervalls von 2 bis 8 Minuten in einer nicht vollständig geschlossenen Metallform eines Presswerkzeugs erfolgt,
- Entnahme des Formkörpers aus dem Presswerkzeug,
- Nachtrocknung des Formkörpers durch Belassen bei Raumtemperatur für 5 Tage oder mit einem Durchlauftrockner bei 90°C über 30 Minuten.

11. Verwendung eines als Sandwich aufgebauten, flächigen Formkörpers nach einem der Ansprüche 1 - 8 als Konstruktionselement in der Bauindustrie für Gebäude oder in der Transportmittelindustrie, vorzugsweise zur Verwendung in Innenräumen von Gebäuden oder in Innenräumen von Transportmitteln, besonders bevorzugt zur Verwendung in Automobilen als Hutablage, als Kofferraumladeboden, als Autotürverkleidungsträger oder als Autohimmel.

## Claims

1. A sandwich-structured, flat molded body for use in the interiors of buildings or in the interiors of means of transport, comprising
a) a central core layer with a plurality of hollow bodies,
b) a fiber mesh on both sides of the core layer and
c) an at least partially foamed, substantially inorganic binder comprising a geopolymer and applied to both sides of the fiber mesh,
wherein the geopolymer is producible from the thermal polymerization of a curable and foamable composition comprising
- at least one solid stone-forming phase consisting of metakaolin,
- at least one aqueous, alkaline phase,
- at least one foaming agent and
- at least one surfactant,
wherein the majority of the formed foam cells of the substantially inorganic binder comprising a geopolymer are again largely destroyed during thermal curing in the limited expansion space of a mold.

2. The sandwich-structured, flat molded body for use in the interiors of buildings or in the interiors of means of transport according to claim 1, **characterized in that** the material composition of the central core layer a) is selected from the group consisting of
natural fibers, including kenaf, kapok, raffia, urena, grasses, rice, husks, bagasse, cotton, jute, hemp, flax, silk, bamboo, sisal, abaca, wood, cellulose, cellulose derivatives, protein fibers, polylactide, alginate, chitin and its derivatives, chitosan, polyisoprenes, bio-based polyamides, paper, cardboard or paperboard,
thin metal foils,
inorganic fibers, optionally coated, including glass fibers, stone fibers, basalt fibers, ceramic fibers and wollastonite as well as
organic-synthetic fibers, including carbon fibers, polyvinyl chloride, polyvinylidene chloride, polyester, polyethylene terephthalate, polybutylene terephthalate, polyamide, polyimide, aramid, polyamideimide, polyacrylonitrile, polymethyl methacrylate, polytetrafluoroethylene, polyethylene, polypropylene, polyurethane, polybenzoxazole, polybenzimidazole, polyurea, melamine, polystyrene, polyphenylene sulfide, polyvinyl alcohol and polycarbonate,
preferably selected from natural or thin metal foils, particularly preferably selected from paper, cardboard or paperboard.

3. The sandwich-structured, flat molded body for use in the interiors of buildings or in the interiors of means of transport according to any of the preceding claims, **characterized in that** the material compositions of the fiber meshes on both sides of the core layer b) are independently selected from the group consisting of
natural fibers, including kenaf, kapok, raffia, urena, grasses, rice, husks, bagasse, cotton, jute, hemp, flax, silk, bamboo, sisal, abaca, wood, cellulose, cellulose derivatives, protein fibers, polylactide, alginate, chitin and its derivatives, chitosan, polyisoprenes, bio-based polyamides, paper, cardboard or paperboard,
metallic fibers,
inorganic fibers, optionally coated, including glass fibers, stone fibers, basalt fibers, ceramic fibers and wollastonite as well as
organic-synthetic fibers, including carbon fibers, polyvinyl chloride, polyvinylidene chloride, polyester, polyethylene terephthalate, polybutylene terephthalate, polyamide, polyimide, aramid, polyamide-imide, polyacrylonitrile, polymethyl methacrylate, polytetrafluoroethylene, polyethylene, polypropylene, polyurethane, polybenzoxazole, polybenzimidazole, polyurea, melamine, polystyrene, polyphenylene sulfide, polyvinyl alcohol and polycarbonate,
preferably selected from inorganic fibers, particularly preferably selected from glass fibers.

4. The sandwich-structured, flat molded body for use in the interiors of buildings or in the interiors of means of transport according to any of the preceding claims, **characterized in that** the hollow bodies of the central core layer a) are selected from any geometric bodies in combination with angular and/or conical and/or cylindrical and/or round and/or spherical bodies, wherein the combination of any geometric bodies with six-sided prismatic bodies is particularly preferred and wherein the cavities of the central core layer are arranged regularly or irregularly, wherein a regular arrangement is preferred and wherein the central core layer consists of one piece in which the geometric bodies are arranged in one layer or in multiple layers.

5. The sandwich-structured, flat molded body for use in the interiors of buildings or in the interiors of means of transport according to any of the preceding claims, **characterized in that** the molded body is enclosed by further structural elements d), preferably carpet, fleece, mat elements or decorative fabrics.

6. The sandwich-structured, flat molded body for use in the interiors of buildings or in the interiors of means of transport according to any of the preceding claims, **characterized in that** the geopolymer of the at least partially foamed, inorganic binder applied to both sides of the fiber mesh is obtainable from the thermal polymerization of a curable and foamable composition comprising
- at least one solid stone-forming phase consisting of metakaolin
- at least one aqueous, alkaline phase selected from the group consisting of alkali salts, alkali silicates, alkali aluminates and alkali hydroxides and optionally of hydroxides, carbonates and oxides of alkaline earths, iron, titanium, silicon and aluminum and aluminates,
- at least one foaming agent selected from the group consisting of peroxide compounds, and of a catalyst for decomposing the peroxide,
- at least one surfactant selected from the group consisting of anionic, non-ionic and amphoteric surfactants and
- optionally a non-reactive filler,
wherein the ratio of the at least one solid stone-forming phase to the at least one alkaline phase, based on solids content, is in the range between 30:70 and 70:30, preferably between 40:60 and 60:40 and particularly preferably 54.4:45.6 and
wherein the thermal polymerization of the substantially inorganic binder takes place in a temperature range between 60°C and 180°C, preferably in a temperature range between 100°C and 140°C.

7. The sandwich-structured, flat molded body for use in the interiors of buildings or in the interiors of means of transport according to any of the preceding claims, **characterized in that** the geopolymer of the at least partially foamed, inorganic binder applied to both sides of the fiber mesh is obtainable from the thermal polymerization of a curable and foamable composition comprising
- at least one solid stone-forming phase consisting of metakaolin, the amount of metakaolin being in a weight range between 42.0 wt.% and 63.2 wt.%, preferably between 47.3 wt.% and 57.9 wt.%, particularly preferably 52.6 wt.%, in relation to the solids content of the binder,
- at least one aqueous, alkaline phase comprising alkali silicates, wherein the weight ratio SiO₂ to alkali oxide per liter of solution is between 2.5 and 3.9, preferably between 2.9 and 3.5 and the pH of a 1:100 diluted solution of the at least one aqueous, alkaline phase according to DIN 38404-5:20098-07 is between 10 and 11 and the electrical conductivity of a 1:100 diluted solution of the at least one aqueous alkaline phase according to DIN EN 27888:19983-11 is between 2000 µS/cm and 3000 µS/cm and wherein the amount of the alkaline phase is in a weight range between 35.4 wt.% and 53.0 wt.%, preferably between 39.8 wt.% and 48.6 wt.%, particularly preferably 44.2 wt.% in relation to the solids content of the binder,
- at least one foaming agent consisting of H₂O₂, and a catalyst for decomposing the peroxide, preferably a transition metal salt, wherein the weight range of the H₂O₂ is between 0.17 wt.% and 0.45 wt.%, preferably between 0.24 wt.% and 0.38 wt.%, particularly preferably 0.31 wt.%, in relation to the solids content of the binder, and the weight range of the transition metal salt is between 0.001 wt.% and 0.013 wt.%, preferably between 0.004 wt.% and 0.010 wt.%, particularly preferably 0.007 wt.%, in relation to the solids content of the binder,
- at least one surfactant consisting of a combination of an anionic surfactant with a non-ionic surfactant, wherein the weight range of the surfactants is between 2.35 wt.% and 3.55 wt.%, preferably between 2.65 wt.% and 3.25 wt.%, particularly preferably 2.95 wt.% in relation to the solids content of the binder and the weight ratio of the anionic surfactant to the non-ionic surfactant is in a range between 1.5:1 and 5:1, preferably between 2:1 and 4.5:1 and most preferably 3.9:1 and
- optionally a non-reactive filler,
wherein the ratio of the at least one solid stone-forming phase to the at least one alkaline phase, in relation to solids content, is in the range between 30:70 and 70:30, preferably between 40:60 and 60:40 and particularly preferably 54.4:45.6 and
wherein the weight ratio of Al₂O₃ to SiO₂ in which at least partially foamed, substantially inorganic binders, comprising a geopolymer, which are applied to both sides of the fiber mesh are in a range between 12% and 35%, and
wherein the weight ratio of Al₂O₃ to the Na₂O is in a range of 60% and 130%, and
wherein the weight ratio of K₂O to Al₂O₃ is in a range of 2% to 13%, and
wherein the thermal polymerization of the substantially inorganic binder takes place in a temperature range between 60°C and 180°C, preferably in a temperature range between 100°C and 140°C.

8. The sandwich-structured, flat molded body for use in the interiors of buildings or in the interiors of means of transport according to any of the preceding claims, **characterized in that** the molded body is free of synthetic, organic polymers.

9. A method for producing sandwich-structured, flat molded body for use in the interiors of buildings or in the interiors of means of transport according to one of the preceding claims, comprising the following steps:
- providing a central core layer a),
- applying a fiber mesh b) to both sides of the central core layer a),
- impregnating the double-sided fiber mesh b) on the central core layer a) with a substantially inorganic binder comprising
1. at least one solid stone-forming phase consisting of metakaolin,
2. at least one aqueous, alkaline phase selected from the group consisting of alkali salts, alkali silicates, alkali aluminates and alkali hydroxides and optionally of hydroxides, carbonates and oxides of alkaline earths, iron, titanium, silicon and aluminum and aluminates,
3. at least one foaming agent selected from the group consisting of peroxide compounds, and a catalyst for decomposing the peroxide,
4. at least one surfactant selected from the group consisting of anionic, non-ionic and amphoteric surfactants and
5. optionally a non-reactive filler,
wherein the ratio of the at least one solid stone-forming phase to the at least one alkaline phase, based on the solids content, is in the range between 30:70 and 70:30, preferably between 40:60 and 60:40 and particularly preferably 54.4:45.6, and
wherein the application of the inorganic binder is between 100 g/m² and 900 g/m², and
wherein the thermal polymerization of the substantially inorganic binder takes place in a temperature range between 60°C and 180°C, preferably in a temperature range between 100°C and 140°C within a time interval of 2 to 8 minutes in a not completely closed metal mold of a pressing tool,
- removing the molded body from the pressing tool,
- post-drying of the molded body by leaving it at room temperature for 5 days or with a continuous dryer at 90°C for 30 minutes.

10. A method for producing the sandwich-structured, flat molded body for use in the interiors of buildings or in the interiors of means of transport according to claim 9, comprising the following steps:
- providing a central core layer a) of paper, cardboard or paperboard,
- applying a glass fiber mesh b) to both sides of the central core layer a) made of paper, cardboard or paperboard,
- spraying the double-sided glass fiber mesh b) on the central core layer a) of paper, cardboard or paperboard with a substantially inorganic binder comprising
1. at least one solid stone-forming phase consisting of metakaolin, the amount of metakaolin being in a weight range between 42.0 wt.% and 63.2 wt.%, preferably between 47.3 wt.% and 57.9 wt.%, particularly preferably 52.6 wt.%, in relation to the solids content of the binder,
2. at least one aqueous, alkaline phase comprising alkali silicates, wherein the weight ratio SiO₂ to alkali oxide per liter of solution is between 2.5 and 3.9, preferably between 2.9 and 3.5, and the pH of a 1:100 diluted solution of the at least one aqueous alkaline phase according to DIN 38404-5:20098-07 is between 10 and 11, and the electrical conductivity of a 1:100 diluted solution of the at least one aqueous alkaline phase according to DIN EN 27888:19983-11 is between 2000 µS/cm and 3000 µS/cm, and wherein the amount of the alkaline phase is in a weight range between 35.4 wt.% and 53.0 wt.%, preferably between 39.8 wt.% and 48.6 wt.%, particularly preferably 44.2 wt.%, in relation to the solids content of the binder,
3. at least one foaming agent consisting of H₂O₂ , and a catalyst for decomposing the peroxide, preferably a transition metal salt, wherein the weight range of the H₂O₂ between 0.17 wt.% and 0.45 wt.%, preferably between 0.24 wt.% and 0.38 wt.%, particularly preferably 0.31 wt.%, based on the solids content of the binder, and the weight range of the transition metal salt is between 0.001 wt.% and 0.013 wt.%, preferably between 0.004 wt.% and 0.010 wt.%, particularly preferably 0.007 wt.%, in relation to the solids content of the binder,
4. at least one surfactant consisting of a combination of an anionic surfactant with a non-ionic surfactant, wherein the weight range of the surfactants is between 2.35 wt.% and 3.55 wt.%, preferably between 2.65 wt.% and 3.25 wt.%, particularly preferably 2.95 wt.% in relation to the solids content of the binder and the weight ratio of the anionic surfactant to the non-ionic surfactant is in a range between 1.5:1 and 5:1, preferably between 2:1 and 4.5:1 and most preferably 3.9:1 and
5. optionally a non-reactive filler,
wherein the ratio of the at least one solid stone-forming phase to the at least one alkaline phase, based on the solids content, is in the range between 30:70 and 70:30, preferably between 40:60 and 60:40 and particularly preferably 54.4:45.6, and
wherein the weight ratio of Al₂O₃ to SiO₂ in which at least partially foamed, substantially inorganic binders, comprising a geopolymer, which are applied to both sides of the fiber mesh are in a range between 12% and 35%, and
wherein the weight ratio of Al₂O₃ to the Na₂O is in a range of 60% and 130%, and
wherein the weight ratio of K₂O to Al₂O₃ is in a range of 2% to 13%, and
wherein the application of the inorganic binder is between 100 g/m² and 900 g/m², and
wherein the thermal polymerization of the substantially inorganic binder takes place in a temperature range between 60°C and 180°C, preferably in a temperature range between 100°C and 140°C within a time interval of 2 to 8 minutes in a not completely closed metal mold of a pressing tool,
- removing the molded body from the pressing tool,
- post-drying of the molded body by leaving it at room temperature for 5 days or with a continuous dryer at 90°C for 30 minutes.

11. A use of the sandwich-structured, flat molded body according to any of claims 1 - 8 as a construction element in the construction industry for buildings or in the transport industry, preferably for use in the interiors of buildings or in the interiors of transport means, particularly preferably for use in automobiles as a parcel shelf, as a trunk cargo floor, as a car door panel support or as a car headliner.

## Revendications

1. Corps moulé plat, construit en sandwich et destiné à être utilisé dans des espaces intérieurs de bâtiments ou dans des espaces intérieurs de moyens de transport, comprenant
a) une couche d'âme centrale comportant une pluralité de corps creux,
b) un treillis de fibres des deux côtés de la couche d'âme ; et
c) un liant sensiblement inorganique, au moins partiellement expansé, appliqué sur les deux côtés du treillis de fibres et comprenant un géopolymère,
dans lequel le géopolymère peut être préparé à partir de la polymérisation thermique d'une composition pouvant être durcie et expansée qui comprend
- au moins une phase solide formant des roches et constituée de métakaolin,
- au moins une phase alcaline aqueuse,
- au moins un agent moussant et
- au moins un tensioactif,
dans lequel la pluralité de cellules de mousse formées du liant sensiblement inorganique et comprenant un géopolymère sont à nouveau en grande partie détruites pendant le durcissement thermique dans l'espace d'expansion limité d'un moule de pressage.

2. Corps moulé plat, construit en sandwich et destiné à être utilisé dans des espaces intérieurs de bâtiments ou dans des espaces intérieurs de moyens de transport selon la revendication 1, **caractérisé en ce que** la composition matérielle de la couche d'âme centrale a) est choisie dans le groupe constitué de
fibres naturelles comprenant kénaf, kapok, raphia, uréna, graminées, riz, écorces, bagasse, coton, jute, chanvre, lin, soie, bambou, sisal, abaca, bois, cellulose, dérivés de cellulose, fibres protéiniques, polylactide, alginate, chitine et ses dérivés, chitosane, polyisoprènes, polyamides biosourcés, papier, carton ou carton-pâte,
fines feuilles de métal,
fibres inorganiques, éventuellement enrobées, comprenant fibres de verre, fibres de roche, fibres de basalte, fibres de céramique et wollastonite, et
fibres organiques synthétiques, comprenant fibres de carbone, polychlorure de vinyle, polychlorure de vinylidène, polyester, polyéthylène téréphtalate, polybutylène téréphtalate, polyamide, polyimide, aramide, polyamide-imide, polyacrylonitrile, polyméthacrylate de méthyle, polytétrafluoroéthylène, polyéthylène, polypropylène, polyuréthane, polybenzoxazole, polybenzimidazole, polyurée, mélamine, polystyrène, polysulfure de phénylène, alcool polyvinylique et polycarbonate,
de préférence choisie parmi feuilles métalliques naturelles ou minces, de manière particulièrement préférée choisie parmi papier, carton ou carton-pâte.

3. Corps moulé plat, construit en sandwich et destiné à être utilisé dans des espaces intérieurs de bâtiments ou dans des espaces intérieurs de moyens de transport selon l'une des revendications précédentes, **caractérisé en ce que** les compositions matérielles des treillis de fibres b) situés des deux côtés de la couche d'âme sont choisies indépendamment l'une de l'autre dans le groupe constitué de
fibres naturelles comprenant kénaf, kapok, raphia, uréna, graminées, riz, écorces, bagasse, coton, jute, chanvre, lin, soie, bambou, sisal, abaca, bois, cellulose, dérivés de cellulose, fibres protéiniques, polylactide, alginate, chitine et ses dérivés, chitosane, polyisoprènes, polyamides biosourcés, papier, carton ou carton-pâte,
fibres métalliques,
fibres inorganiques, éventuellement enrobées, comprenant fibres de verre, fibres de roche, fibres de basalte, fibres de céramique et wollastonite, et
fibres organiques synthétiques, comprenant fibres de carbone, polychlorure de vinyle, polychlorure de vinylidène, polyester, polyéthylène téréphtalate, polybutylène téréphtalate, polyamide, polyimide, aramide, polyamide-imide, polyacrylonitrile, polyméthacrylate de méthyle, polytétrafluoroéthylène, polyéthylène, polypropylène, polyuréthane, polybenzoxazole, polybenzimidazole, polyurée, mélamine, polystyrène, polysulfure de phénylène, alcool polyvinylique et polycarbonate,
de préférence choisies parmi fibres inorganiques, de manière particulièrement préférée choisies parmi fibres de verre.

4. Corps moulé plat, construit en sandwich et destiné à être utilisé dans des espaces intérieurs de bâtiments ou dans des espaces intérieurs de moyens de transport selon l'une des revendications précédentes, **caractérisé en ce que** les corps creux de la couche d'âme centrale a) sont choisis parmi des corps géométriques quelconques en combinaison avec des corps angulaires et/ou coniques et/ou cylindriques et/ou ronds et/ou sphériques, dans lequel la combinaison de corps géométriques quelconques avec des corps prismatiques à six faces est particulièrement préférée et dans lequel les cavités de la couche d'âme centrale sont disposées de manière régulière ou irrégulière, dans lequel une disposition régulière est préférée et dans lequel la couche d'âme centrale est constituée d'une pièce dans laquelle les corps géométriques sont disposés en une seule couche ou en plusieurs couches.

5. Corps moulé plat, construit en sandwich et destiné à être utilisé dans des espaces intérieurs de bâtiments ou dans des espaces intérieurs de moyens de transport selon l'une des revendications précédentes, **caractérisé en ce que** le corps moulé est entouré d'autres éléments de structure d), de préférence d'éléments de type tapis, non-tissé, nattes ou de tissus décoratifs.

6. Corps moulé plat, construit en sandwich et destiné à être utilisé dans des espaces intérieurs de bâtiments ou dans des espaces intérieurs de moyens de transport selon l'une des revendications précédentes, **caractérisé en ce que** le géopolymère du liant inorganique au moins partiellement expansé et appliqué des deux côtés sur le treillis de fibres peut être obtenu à partir de la polymérisation thermique d'une composition pouvant être durcie et expansée qui comprend
- au moins une phase solide formant des roches et constituée de métakaolin
- au moins une phase aqueuse alcaline choisie dans le groupe constitué de sels alcalins, silicates alcalins, aluminates alcalins et hydroxydes alcalins, et éventuellement d'hydroxydes, carbonates et oxydes de métaux alcalino-terreux, de fer, de titane, de silicium et d'aluminium, et d'aluminates,
- au moins un agent moussant choisi dans le groupe constitué de composés peroxydes, ainsi qu'un catalyseur pour la décomposition du peroxyde,
- au moins un tensioactif choisi dans le groupe constitué de tensioactifs anioniques, non ioniques et amphotères, et
- éventuellement, une charge non réactive,
dans lequel le rapport quantitatif de l'au moins une phase solide formant des roches à l'au moins une phase alcaline, par rapport à la teneur en matières solides, se situe dans la plage comprise entre 30:70 et 70:30, de préférence entre 40:60 et 60:40 et de manière particulièrement préférée est de 54,4:45,6 et
dans lequel la polymérisation thermique du liant sensiblement inorganique est effectuée dans une plage de températures comprise entre 60 °C et 180 °C, de préférence dans une plage de températures comprise entre 100 °C et 140 °C.

7. Corps moulé plat, construit en sandwich et destiné à être utilisé dans des espaces intérieurs de bâtiments ou dans des espaces intérieurs de moyens de transport selon l'une des revendications précédentes, **caractérisé en ce que** le géopolymère du liant inorganique au moins partiellement expansé et appliqué des deux côtés sur le treillis de fibres peut être obtenu à partir de la polymérisation thermique d'une composition pouvant être durcie et expansée qui comprend
- au moins une phase solide formant des roches et constituée de métakaolin, dans lequel la quantité de métakaolin se situe dans une plage de poids comprise entre 42,0 % en poids et 63,2 % en poids, de préférence entre 47,3 % en poids et 57,9 % en poids, de manière particulièrement préférée est de 52,6 % en poids, par rapport à la teneur en matières solides du liant,
- au moins une phase alcaline aqueuse comprenant des silicates alcalins, dans lequel le rapport pondéral du SiO₂ à l'oxyde alcalin par litre de solution se situe entre 2,5 et 3,9, de préférence entre 2,9 et 3,5, et le pH d'une solution diluée au 1:100 de l'au moins une phase alcaline aqueuse selon la norme DIN 38404-5:20098-07 se situe entre 10 et 11 et la conductivité électrique d'une solution diluée au 1:100 de l'au moins une phase alcaline aqueuse selon la norme DIN EN 27888:19983-11 se situe entre 2000 µS/cm et 3000 µS/cm et dans lequel la quantité de la phase alcaline se situe dans une plage de poids comprise entre 35,4 % en poids et 53,0 % en poids, de préférence entre 39,8 % en poids et 48,6 % en poids, de manière particulièrement préférée est de 44,2 % en poids, par rapport à la teneur en matières solides du liant,
- au moins un agent moussant, constitué de H₂O₂, ainsi qu'un catalyseur pour la décomposition du peroxyde, de préférence un sel de métal de transition, dans lequel la plage de poids du H₂O₂ se situe entre 0,17 % en poids et 0,45 % en poids, de préférence entre 0,24 % en poids et 0,38 % en poids, de manière particulièrement préférée est de 0,31 % en poids, par rapport à la teneur en matières solides du liant, et la plage de poids du sel de métal de transition se situe entre 0,001 % en poids et 0,013 % en poids, de préférence entre 0,004 % en poids et 0,010 % en poids, de manière particulièrement préférée est de 0,007 % en poids, par rapport à la teneur en matières solides du liant,
- au moins un tensioactif, constitué d'une combinaison d'un tensioactif anionique avec un tensioactif non ionique, dans lequel la plage de poids des tensioactifs se situe entre 2,35 % en poids et 3,55 % en poids, de préférence entre 2,65 % en poids et 3,25 % en poids, de manière particulièrement préférée est de 2,95 % en poids, par rapport à la teneur en matières solides du liant, et le rapport pondéral du tensioactif anionique au tensioactif non ionique se situe dans une plage comprise entre 1,5:1 et 5:1, de préférence entre 2:1 et 4,5:1, et de manière la plus préférée est de 3,9:1, et
- éventuellement, une charge non réactive,
dans lequel le rapport quantitatif de l'au moins une phase solide formant des roches à l'au moins une phase alcaline, par rapport à la teneur en matières solides, se situe dans la plage comprise entre 30:70 et 70:30, de préférence entre 40:60 et 60:40 et de manière particulièrement préférée est de 54,4:45,6 et
dans lequel le rapport pondéral de Al₂O₃ à SiO₂ dans le liant sensiblement inorganique, au moins partiellement expansé, appliqué des deux côtés sur le treillis de fibres et comprenant un géopolymère se situe dans la plage comprise entre 12 % et 35 % et
dans lequel le rapport pondéral de Al₂O₃ à Na₂O se situe dans une plage allant de 60 % et 130 % et
dans lequel le rapport pondéral de K₂O à Al₂O₃ se situe dans une plage allant de 2 % et 13 % et
dans lequel la polymérisation thermique du liant sensiblement inorganique a lieu dans une plage de températures comprise entre 60 °C et 180 °C, de préférence dans une plage de températures comprise entre 100 °C et 140 °C.

8. Corps moulé plat, construit en sandwich et destiné à être utilisé dans des espaces intérieurs de bâtiments ou dans des espaces intérieurs de moyens de transport selon l'une des revendications précédentes, **caractérisé en ce que** le corps moulé est exempt de polymères organiques synthétiques.

9. Procédé pour la fabrication d'un corps moulé plat, construit en sandwich et destiné à être utilisé dans des espaces intérieurs de bâtiments ou dans des espaces intérieurs de moyens de transport selon l'une des revendications précédentes, comportant les étapes suivantes :
- fourniture d'une couche d'âme centrale a),
- application d'un treillis de fibres b) des deux côtés sur la couche d'âme centrale a),
- imprégnation du treillis de fibres b) des deux côtés sur la couche d'âme centrale a) avec un liant sensiblement inorganique qui comprend
1. au moins une phase solide formant des roches et constituée de métakaolin,
2. au moins une phase alcaline aqueuse choisie dans le groupe constitué de sels alcalins, silicates alcalins, aluminates alcalins et hydroxydes alcalins, et éventuellement d'hydroxydes, carbonates et oxydes de métaux alcalino-terreux, de fer, de titane, de silicium et d'aluminium, et d'aluminates,
3. au moins un agent moussant choisi dans le groupe constitué de composés peroxydes, ainsi qu'un catalyseur pour la décomposition du peroxyde,
4. au moins un tensioactif choisi dans le groupe constitué de tensioactifs anioniques, non ioniques et amphotères, et
5. éventuellement, une charge non réactive,
dans lequel le rapport quantitatif de l'au moins une phase solide formant des roches à l'au moins une phase alcaline, par rapport à la teneur en matières solides, se situe dans la plage comprise entre 30:70 et 70:30, de préférence entre 40:60 et 60:40 et de manière particulièrement préférée est de 54,4:45,6, et
dans lequel l'application du liant inorganique se situe entre 100 g/m² et 900 g/m² et
dans lequel la polymérisation thermique du liant sensiblement inorganique est effectuée dans une plage de températures comprise entre 60 °C et 180 °C, de préférence dans une plage de températures comprise entre 100 °C et 140 °C, dans un intervalle de temps allant de 2 à 8 minutes, dans un moule métallique non complètement fermé d'un outil de pressage,
- retrait du corps moulé de l'outil de pressage,
- post-séchage du corps moulé en le laissant à température ambiante pendant 5 jours ou en utilisant un séchoir continu à 90 °C pendant 30 minutes.

10. Procédé pour la fabrication d'un corps moulé plat, construit en sandwich et destiné à être utilisé dans des espaces intérieurs de bâtiments ou dans des espaces intérieurs de moyens de transport selon la revendication 9, comportant les étapes suivantes :
- fourniture d'une couche d'âme centrale a) en papier, carton ou carton-pâte,
- application d'un treillis de fibres de verre b) des deux côtés sur la couche d'âme centrale a) en papier, carton ou carton-pâte,
- pulvérisation d'un liant sensiblement inorganique sur le treillis de fibres de verre b) des deux côtés sur la couche centrale a) en papier, carton ou carton-pâte, lequel liant comprend
1. au moins une phase solide formant des roches et constituée de métakaolin, dans lequel la quantité de métakaolin se situe dans une plage de poids comprise entre 42,0 % en poids et 63,2 % en poids, de préférence entre 47,3 % en poids et 57,9 % en poids, de manière particulièrement préférée est de 52,6 % en poids, par rapport à la teneur en matières solides du liant,
2. au moins une phase alcaline aqueuse comprenant des silicates alcalins, dans lequel le rapport pondéral du SiO₂ à l'oxyde alcalin par litre de solution se situe entre 2,5 et 3,9, de préférence entre 2,9 et 3,5, et le pH d'une solution diluée au 1:100 de l'au moins une phase alcaline aqueuse selon la norme DIN 38404-5:20098-07 se situe entre 10 et 11 et la conductivité électrique d'une solution diluée au 1:100 de l'au moins une phase alcaline aqueuse selon la norme DIN EN 27888:19983-11 se situe entre 2000 µS/cm et 3000 µS/cm et dans lequel la quantité de la phase alcaline se situe dans une plage de poids comprise entre 35,4 % en poids et 53,0 % en poids, de préférence entre 39,8 % en poids et 48,6 % en poids, de manière particulièrement préférée est de 44,2 % en poids, par rapport à la teneur en matières solides du liant,
3. au moins un agent moussant constitué de H₂O₂, ainsi qu'un catalyseur pour la décomposition du peroxyde, de préférence un sel de métal de transition, dans lequel la plage de poids du H₂O₂ se situe entre 0,17 % en poids et 0,45 % en poids, de préférence entre 0,24 % en poids et 0,38 % en poids, de manière particulièrement préférée est de 0,31 % en poids, par rapport à la teneur en matières solides du liant, et la plage de poids du sel de métal de transition se situe entre 0,001 % en poids et 0,013 % en poids, de préférence entre 0,004 % en poids et 0,010 % en poids, de manière particulièrement préférée est de 0,007 % en poids, par rapport à la teneur en matières solides du liant,
4. au moins un tensioactif, constitué d'une combinaison d'un tensioactif anionique avec un tensioactif non ionique, dans lequel la plage de poids des tensioactifs se situe entre 2,35 % en poids et 3,55 % en poids, de préférence entre 2,65 % en poids et 3,25 % en poids, de manière particulièrement préférée est de 2,95 % en poids, par rapport à la teneur en matières solides du liant, et le rapport pondéral du tensioactif anionique au tensioactif non ionique se situe dans une plage comprise entre 1,5:1 et 5:1, de préférence entre 2:1 et 4,5:1, et de manière la plus préférée est de 3,9:1, et
5. éventuellement, une charge non réactive,
dans lequel le rapport quantitatif de l'au moins une phase solide formant des roches à l'au moins une phase alcaline, par rapport à la teneur en matières solides, se situe dans la plage comprise entre 30:70 et 70:30, de préférence entre 40:60 et 60:40 et de manière particulièrement préférée est de 54,4:45,6, et
dans lequel le rapport pondéral de Al₂O₃ à SiO₂ dans le liant sensiblement inorganique, au moins partiellement expansé, appliqué des deux côtés sur le treillis de fibres et comprenant un géopolymère se situe dans la plage comprise entre 12 % et 35 % et
dans lequel le rapport pondéral de Al₂O₃ à Na₂O se situe dans une plage allant de 60 % et 130 % et
dans lequel le rapport pondéral de K₂O à Al₂O₃ se situe dans une plage allant de 2 % et 13 % et
dans lequel l'application du liant inorganique se situe entre 100 g/m² et 900 g/m² et
dans lequel la polymérisation thermique du liant sensiblement inorganique est effectuée dans une plage de températures comprise entre 60 °C et 180 °C, de préférence dans une plage de températures comprise entre 100 °C et 140 °C, dans un intervalle de temps allant de 2 à 8 minutes, dans un moule métallique non complètement fermé d'un outil de pressage,
- retrait du corps moulé de l'outil de pressage,
- post-séchage du corps moulé en le laissant à température ambiante pendant 5 jours ou en utilisant un séchoir continu à 90 °C pendant 30 minutes.

11. Utilisation d'un corps moulé plat construit en sandwich selon l'une des revendications 1 à 8 comme élément de construction dans l'industrie du bâtiment pour des bâtiments ou dans l'industrie des moyens de transport, de préférence, destiné à être utilisé dans des espaces intérieurs de bâtiments ou dans des espaces intérieurs de moyens de transport, de manière particulièrement préférée, destiné à être utilisé dans des automobiles comme plage arrière, comme plancher de chargement de coffre, comme support de revêtement de porte de voiture ou comme ciel de toit.
